# EUROPÄISCHE PATENTSCHRIFT

(11) **EP 3 968 427 B1**
(45) Veröffentlichungstag und Bekanntmachung des Hinweises auf die Patenterteilung: **11.11.2026**
(21) Anmeldenummer: 21196565.2
(22) Anmeldetag: 14.09.2021
(51) Int. Cl.: H01M 10/04, H01M 10/0585

(54) **VERFAHREN UND VORRICHTUNG ZUR HERSTELLUNG EINES ZELLSTAPELS FÜR BATTERIEZELLEN**
METHOD AND DEVICE FOR PRODUCING A CELL STACK FOR BATTERY CELLS
PROCÉDÉ ET DISPOSITIF DE FABRICATION D'UN EMPILEMENT DE CELLULES POUR BATTERIE

(30) Priorität: 15.09.2020 DE 102020124040
(43) Veröffentlichungstag der Anmeldung: 16.03.2022
(73) Patentinhaber: PowerCo SE, 38239 Salzgitter (DE)
(72) Erfinder: Jamadar, Kartik, 38442 Wolfsburg (DE); Theuerkauf, Christian, 38114 Braunschweig (DE)
(74) Vertreter: karo IP

(56) Entgegenhaltungen:
- EP-A1- 2 879 223
- EP-A1- 3 780 212
- WO-A1-2019/188725
- DE-A1- 102015 218 533

## Beschreibung

Die vorliegende Erfindung betrifft ein Verfahren und eine Vorrichtung zur Herstellung eines Zellstapels für Batteriezellen.

Im Stand der Technik ist es bekannt Zellstapel für Batteriezellen herzustellen, indem Einzelanlagen für das Vereinzeln von Kathoden-, Anoden- und Separatorblättern verwendet werden. Die auf diese Weise hergestellten Blätter werden dann jeweils einzelnen und getrennt in Magazinen angeliefert und beim Einzelblattstapeln während der Bildung des Stapels einzeln positioniert und ausgerichtet. Dieser Prozess der Herstellung eines Zellstapels benötigt sehr hohe Taktzeiten.

Eine weitere bekannte Methode stellt das sogenannte Z-Falten dar, bei dem ein Separatorblatt um einzelne Elektrodenblätter gewickelt wird, die jedoch ebenfalls in einem vorgelagerten Prozessschritt zuvor vereinzelt und positioniert werden müssen. Auch das Z-Falten ermöglicht nur relativ langsame Taktzeiten.

Weiterhin ist es bekannt eine Stapelbildung mittels eines Laminationsprozesses vorzunehmen. Dazu ist es jedoch erforderlich die Kathodenblätter und die Anodenblätter mit Separatorfolien zu laminieren. Die dafür benötigen laminierfähigen Separatorfolien sind jedoch relativ teuer.

Die bislang bekannten Konzepte haben unterschiedliche Nachteile. So stellt die Zellstapelbildung aktuell einen sehr langsamen Prozess bei der Produktion von Batteriezellen dar. Auch die Einhaltung der erforderlichen Positionstoleranzen ist im Stapelbildungsprozess bei kurzen Taktzeiten aktuell nur äußerst schwierig zu realisieren. Zudem sind mit der getrennten Vorbereitung von Einzelblättern für den Zellstapel, dem anschließenden Magazinieren, dem Zusammenführen, dem Stapeln und dem Verbinden eine Reihe von Prozessschritten erforderlich, die jeweils ein aufwändiges Handling des Materials erfordern. Die Vielzahl von Prozessschritten erfordert zudem einen größeren anlagentechnischen Aufwand und es können nur relativ langsame Taktzeiten erreicht werden.

Die EP 2 879 223 A1 ist auf eine Stapelvorrichtung und ein Stapelverfahren für Batterien gerichtet.

Aus der DE 10 2015 218533 A1 ist ein Verfahren zur Herstellung eines Elektrodenverbunds bekannt.

Die WO 2019/188725 A1 ist auf eine Herstellungsvorrichtung und ein Herstellungsverfahren für einen Stapel von Elektroden gerichtet.

Aufgabe der vorliegenden Erfindung ist es daher, die sich aus dem Stand der Technik ergebenden Probleme zumindest teilweise zu lösen. Insbesondere sollen ein Verfahren und eine Vorrichtung angegeben werden, mit denen ein Zellstapel für Batteriezellen besonders schnell hergestellt werden kann. Zudem soll die Positionsgenauigkeit der verwendeten Werkstoffbahnen verbessert und der anlagentechnische Aufwand reduziert werden.

Zur Lösung dieser Aufgaben trägt ein Verfahren mit den Merkmalen gemäß Patentanspruch 1 bei. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und/oder Details aus den Figuren ergänzt werden, wobei weitere Ausführungsvarianten der Erfindung aufgezeigt werden.

Vorliegend wird ein Verfahren zur Herstellung eines Zellstapels für Batteriezellen vorgeschlagen, das wenigstens die folgenden Schritte aufweist:
a) Zuführen wenigstens einer ersten Werkstoffbahn, bestehend aus einem ersten Werkstoff,
b) Ausführen eines ersten Zuschnitts an wenigstens der ersten Werkstoffbahn unter Ausbildung wenigstens eines zugfesten streifenförmigen Transportabschnitts, wobei der Transportabschnitt Zugkräfte in einer Längsrichtung der Werkstoffbahn aufnehmen kann;
c) Zusammenführen der ersten Werkstoffbahn mit wenigstens einer zweiten Werkstoffbahn, bestehend aus einem zweiten Werkstoff, zu einem Teilstapel;
d) Fixieren des so erzeugten Teilstapels an einer ersten Fixierstelle mittels einer ersten verfahrbaren Spannvorrichtung,
e) Nachführen wenigstens einer Werkstoffbahn, wobei eine zusätzliche Länge dieser Werkstoffbahn von einer Vorratseinrichtung abgezogen wird, so dass diese Werkstoffbahn mit einer Länge verarbeitet wird, die größer ist als die Länge der nicht nachgeführten Werkstoffbahnen, und
   Fixieren des so erzeugten Teilstapels an einer zweiten Fixierstelle mittels einer zweiten verfahrbaren Spannvorrichtung, sodass der Überstand des einen Werkstoffes zum Anderen automatisch gewährleistet ist,
f) Ausführen eines zweiten Zuschnitts des fixierten Teilstapels, wobei der Transportabschnitt durchtrennt und damit eine vollständige Teilung des Teilstapels in transversaler Richtung erzeugt wird;
g) Lösen der Spannvorrichtungen, um die in Schritt e) erzeugten und in Schritt f) voneinander getrennten Teilstapel freizugeben,
h) Anordnen von wenigstens zwei Teilstapeln zu einem Zellstapel.

Die Schritte a) bis g) können wenigstens einmal in der hier angegebenen Reihenfolge a), b), c), d), e), f) und g) durchgeführt werden. Es ist möglich, dass diese Schritte unterschiedlich oft und/oder zumindest teilweise zeitlich überlagernd durchgeführt werden.

Hierbei werden in den Verfahrensschritten a) und b) zunächst mindestens eine erste Werkstoffbahn mit einem ersten Werkstoff und eine zweite Werkstoffbahn mit einem zweiten Werkstoff zugeführt. Die jeweilige Werkstoffbahn kann beispielsweise für die Anwendung als Anode, Kathode oder Separator einer Batteriezelle gewählt werden. Für eine Anode etwa bietet sich ein Substrat aus einem kupferhaltigen Material und eine darauf aufgebrachte Anodenaktivschicht an. Entsprechend ist beispielsweise ein aluminiumhaltiger Werkstoff als Substrat für eine darauf aufgebrachte Kathodenaktivschicht geeignet. Für Separatoren kommen beispielsweise flexible mikroporöse Kunststoffe oder Vliese in Betracht.

Die Werkstoffbahnen können vorzugsweise von Vorratseinrichtungen, wie etwa Spulen bzw. Coils, mit großen Bahnlängen zugeführt werden, so dass über einen langen Zeitraum ein kontinuierlicher unterbrechungsfreier Betrieb des Verfahrens möglich ist.

Führt man beispielsweise eine erste Werkstoffbahn zu, die für die Herstellung einer Anode geeignet ist, kann diese Bahn an einer ersten Schneidvorrichtung einem ersten Zuschnitt unterzogen werden, wobei der Zuschnitt so erfolgt, dass wenigstens ein zugfester Transportabschnitt verbleibt. Der Transportabschnitt soll dabei so ausgebildet sein, dass er Zugkräfte in einer Längsrichtung der Werkstoffbahn aufnehmen kann. Dies erlaubt es, die Werkstoffbahn in den folgenden Schritten als eine durchgehende Werkstoffbahn zu verarbeiten, da die zum Weitertransport erforderlichen Kräfte in den Transportabschnitt eingeleitet werden können.

Zeitgleich wird an der zweiten Werkstoffbahn ebenfalls ein erster Zuschnitt ausgeführt, so dass auch an dieser Werkstoffbahn ein Transportabschnitt entsteht, der zur Aufnahme von Kräften für den Weitertransport und die weitere Verarbeitung geeignet ist. Hierbei wird jedoch der Transportabschnitt der zweiten Werkstoffbahn so erzeugt, dass dieser nach dem nachfolgenden Zusammenführen der Werkstoffbahnen, transversal, d.h. seitlich und quer zur Längsrichtung der Werkstoffbahn, zum Transportabschnitt der ersten Werkstoffbahn versetzt angeordnet ist. Hierdurch wird es möglich den Beschnitt der verschiedenen Werkstoffbahnen unabhängig voneinander auszuführen.

Im weiteren Verlauf des Verfahrens wird dann die so zugeschnittene erste Werkstoffbahn mit der zweiten Werkstoffbahn, wie etwa einem Separator zu einem Teilstapel zusammengeführt. Insbesondere ist auch die zweite Werkstoffbahn des Separators in einer Vorratseinrichtung, beispielsweise als Separatorcoil, vorgehalten, so dass der Prozess des ersten Zuschnitts und das Zusammenführen der ersten und zweiten Werkstoffbahn mit hoher Geschwindigkeit erfolgen kann. Neben der wählbaren transversal versetzten Anordnung der Trennschnitte, können diese mit der vorliegenden Erfindung aber auch in longitudinaler Richtung der Werkstoffbahnen an unterschiedlichen Positionen vorgesehen werden. Dies ermöglicht den Zuschnitt unterschiedlich langer Werkstoffbahnen in dem kontinuierlich fortlaufenden Fertigungsverfahren.

Im Schritt d) wird der zunächst noch endlos zugeführte Teilstapel bestehend aus den Werkstoffbahnen zunächst mit einer ersten Spannvorrichtung und danach mit einer zweiten Spannvorrichtung gespannt. Die erste Spannvorrichtung dient dabei dazu eine Relativbewegung der Werkstoffbahnen in dem verspannten Bereich zu verhindern. Die zweite Spannvorrichtung dient ebenfalls dazu, die Werkstoffbahnen miteinander zu verspannen. Bei der zweiten Spannvorrichtung wird jedoch zusätzlich dazu im Schritt e) des Verfahrens wenigstens eine Werkstoffbahn nachgeführt. Das heißt, es wird eine zusätzliche Länge dieser Werkstoffbahn von der Vorratseinrichtung abgezogen, so dass diese Werkstoffbahn mit einer Länge verarbeitet wird, die größer ist als die Länge der nicht nachgeführten Werkstoffbahnen. Erst hierdurch wird es möglich Teilstapel aus einer Mehrzahl von Werkstoffbahnen herzustellen, bei denen die unterschiedlichen Werkstoffbahnen in deren Transportrichtung gesehen unterschiedliche Längen aufweisen können.

Nach dem Zusammenführen, Spannen und dem Nachführen wird dann im Schritt f) der so von den Spannvorrichtungen fixierte Teilstapel einem zweiten Zuschnitt zugeführt.

Dazu kann an einer zweiten Schneidvorrichtung der zweite Zuschnitt des Teilstapels erfolgen, wobei der jeweilige Transportabschnitt dann vom Teilstapel abgetrennt bzw. transversal durchtrennt wird, wodurch eine vollständige Teilung des Teilstapels in transversaler Richtung erzeugt wird.

Der so erzeugte und abgetrennte zweischichtige Teilstapel weist beispielsweise eine Anode und einen Separator auf und kann beispielsweise mit weiteren zweischichtigen Teilstapeln, aus Kathoden und Separatoren zu einem Zellstapel angeordnet werden.

Alternativ können anstelle der beschriebenen zwei Werkstoffbahnen auch mehrere Werkstoffbahnen nach einem ersten Zuschnitt zusammengeführt und dann einem zweiten Zuschnitt unterzogen werden. Insbesondere die Verwendung von vier Werkstoffbahnen mit den Reihenfolgen Anode, Separator, Kathode, Separator oder Kathode, Separator, Anode, Separator ist hierbei vorteilhaft, da diese vierschichtigen Teilstapel unmittelbar so oft aufeinander gestapelt werden können, bis der Zellstapel die benötigte Anzahl von Anoden und Kathoden aufweist.

Im Schritt g) werden dann die erste und die zweite Spannvorrichtung gelöst, um die erzeugten und nun voneinander getrennten Teilstapel freizugeben. Hierbei wird vorzugsweise zuerst die zweite Spannvorrichtung und danach bzw. die erste Spannvorrichtung gelöst. Dies hat den Vorteil, dass die erste Spannvorrichtung ein unbeabsichtigtes Verschieben der Werkstoffbahnen relativ zueinander verhindert, solange bis die zweite Spannvorrichtung gelöst ist und die von ihr verspannten Werkstoffbahnen wieder flach aufeinander liegen. Bei der Rückkehr der von der zweiten Spannvorrichtung verspannten Werkstoffbahnen bewegen sich dann die hinteren Schnittkanten, beispielsweise der nachgeführten Separatoren, in deren Transportrichtung nach hinten über das Ende des Teilstapels hinaus, während sie sich wieder flach auf die darunterliegenden Werkstoffbahnen legen.

Hierdurch ragen dann die Separatoren über die Außenkanten der Kathoden und Anoden hinaus und können diese sicher voneinander elektrisch isolieren. Bei Bedarf ist es auch möglich, die zweite Spannvorrichtung so zu gestalten, dass sie neben einem Separator auch eine Elektrode nachführen kann, so dass eine Elektrode länger ist als die andere. Hiermit lassen sich dann beispielsweise vierschichtige Teilstapel herstellen, bei denen die Anode größer ist als die Kathode. Gleichzeitig können dabei die beiden Separatoren sowohl größer sein als die Anode als auch größer als die Kathode.

Im Schritt h) werden schließlich die vereinzelten Teilstapel aufeinander angeordnet, solange bis diese einen Zellstapel mit der gewünschten Höhe aufweisen.

Das beschriebene Verfahren erlaubt eine sehr schnelle und positionsgenaue Fertigung von Zellstapeln mit erheblich kürzeren Fertigungszeiten, als dies bei bekannten Verfahren der Fall ist. Zudem können bestimmte Werkstoffbahnen, wie beispielsweise die Separatoren, nicht nur seitlich sondern auch in Längsrichtung der Werkstoffbahnen über die Kanten der Anoden und Kathoden hinausragen und trotzdem in einem fortlaufenden unterbrechungsfreien Herstellungsverfahren mit sehr hoher Geschwindigkeit hergestellt werden.

Insbesondere kann die zweite Spannvorrichtung in einer Längsrichtung der Werkstoffbahnen zwischen der ersten Spannvorrichtung und den zugeführten Werkstoffbahnen angeordnet werden. Hierdurch ist sichergestellt, dass die Länge der nachgeführten Werkstoffbahn von den zugeführten Werkstoffbahnen bzw. von deren Vorratseinrichtungen her zugeführt wird.

Insbesondere ist es durch die Zuführung in Längsrichtung betrachtet möglich, dass eine im ersten Zuschnitt erzeugte Vorderkante und Hinterkante wenigstens einer Werkstoffbahn über die Vorderkante und Hinterkante einer benachbarten Werkstoffbahn hinausragend angeordnet wird.

Insbesondere vorteilhaft ist es auch, wenn zum Lösen der Spannvorrichtungen die zweite Spannvorrichtung zeitlich vor der ersten Spannvorrichtung gelöst wird, wodurch eine unbeabsichtigtes Nachführen einer Werkstoffbahn von deren in Transportrichtung gesehen vorderem Ende vermieden wird.

Hierzu ist insbesondere vorteilhaft, wenn die erste Spannvorrichtung und die zweite Spannvorrichtung in einer synchronisierten Bewegung mit dem Teilstapel mitbewegt werden. Hierdurch kann ein fortlaufender Herstellungsprozess mit einer kontinuierlichen und gleichbleibenden Fördergeschwindigkeit erreicht werden.

Für eine sichere Isolation der Anoden und Kathoden ist es zudem vorteilhaft, wenn die erste Werkstoffbahn und die zweite Werkstoffbahn auf unterschiedliche Abmessungen zugeschnitten werden.

Insbesondere kann vorgesehen werden, dass Werkstoffbahnen verwendet werden, die zumindest in Querrichtung unterschiedliche Abmessungen aufweisen. Hierbei können etwa die erste Werkstoffbahn und die zweite Werkstoffbahn auf unterschiedliche Abmessungen zugeschnitten werden oder bereits im angelieferten Zustand eine gewünschte Breite aufweisen. Für die Sicherheit von Batteriezellen ist es erforderlich, dass Separatoren in alle Richtungen und in einem ausreichenden Maß über die zu isolierenden Anoden bzw. Kathoden hinausragen, um einen Stromfluss zwischen diesen beiden Werkstoffbahnen sicher zu vermeiden. Hierbei soll ein Übermaß des Separators über eine Kathode ca. 3 mm und über eine Anode ca. 1,5 mm umlaufend betragen. Dies bedeutet beispielsweise, dass der Separator ca. 6 mm größer als die Kathode und ca. 3 mm größer als die Anode sein sollte.

Diese unterschiedlichen Größen können vorzugsweise bereits im Rahmen des ersten Zuschnitts mittels der ersten Schneidvorrichtungen erzeugt werden, die für jede Werkstoffbahn einen individuellen Zuschnitt ausführen. Hierzu wird beispielsweise die Kathode auf die gewünschte Breite zuzüglich der Breite des erforderlichen Transportabschnitts zugeschnitten. Gleichzeitig wird die Anode auf die gewünschte Breite zuzüglich eines Übermaßes von 3 mm zugeschnitten, da diese vorzugsweise größer sein soll als die Kathode. Schließlich wird der Separator auf die gewünschte Breite zuzüglich eines Übermaßes bezogen auf die Breite der Kathode von 6 mm zugeschnitten. Hierbei ist anzumerken, dass in allen drei Werkstoffbahnen bereits auch transversale Schnitte eingebracht werden können. Wichtig ist nur, dass hierbei stets mindestens ein Transportabschnitt beibehalten wird, der dazu geeignet ist, in longitudinaler Richtung der Werkstoffbahnen wirkende Zugkräfte aufzunehmen und/oder weiterzuleiten. Bei allen Breitenmaßen ist die Breite des später teilweise wieder abzutrennenden Transportabschnitts entsprechend zu berücksichtigen ist. Richtet man nun die Werkstoffbahnen seitlich entsprechend zueinander aus, können diese zusammengeführt und der zweiten Schneidvorrichtung zum zweiten Zuschnitt zugeführt werden, um danach vereinzelte Teilstapel zu erhalten, die aufeinandergestapelt werden können.

Besonders vorteilhaft kann in wenigsten einer Werkstoffbahn ein Fensterabschnitt geschaffen werden, der so gewählt ist, dass der Trennschnitt des Transportabschnitts wenigstens einer anderen Werkstoffbahn in diesem Fenster liegt. Dies kann vorzugsweise bereits beim ersten Zuschnitt erfolgen, indem beispielsweise kleine Fenster oder Lochungen in die Werkstoffbahn eingebracht werden, an denen später zum Weitertransport eingesetzte Antriebe mit Stiften, Antriebsrädern oder ähnlichem an- bzw. eingreifen können. Wählt man die Lage der so geschaffenen Fenster einer Werkstoffbahn und den Trennschnitt des Transportabschnitts einer anderen Werkstoffbahn so, dass sich diese innerhalb des Fensters der anderen Werkstoffbahn befindet, kann der in diesem Fensterbereich liegende streifenförmige Transportabschnitt und damit auch die zugehörige Werkstoffbahn, unabhängig von der anderen Werkstoffbahn, an dieser Stelle getrennt werden. Hierzu muss ein beispielsweise bereits vorhandener aber noch nicht durchgehender transversaler Trennschnitt lediglich bis hin zum Rand der Werkstoffbahn verlängert werden. Dieses Merkmal schafft somit die Möglichkeit, zwei mittelbar oder unmittelbar übereinander angeordnete Werkstoffbahnen unabhängig voneinander zuzuschneiden. Hierbei kann die Lage der Trennschnitte sowohl in transversaler als auch in longitudinaler Richtung der Werkstoffbahnen an unterschiedlichen Positionen liegen.

Insbesondere können, wie bereits zuvor beschrieben, nach dem zweiten Zuschnitt wenigstens zwei Teilstapeln (gemeinsam) zu einem Zellstapel angeordnet werden.

Insbesondere können die Teilstapel aus wenigstens vier Werkstoffbahnen gebildet werden. Hierbei ist vor allem die Kombination von Werkstoffbahnen in Form von zwei Elektroden und zwei Separatoren vorteilhaft. Bildet man aus diesen Werkstoffbahnen möglichen Kombinationen, so können die daraus hergestellten Teilstapel bis zu der benötigten Höhe des Zellstapels übereinander angeordnet werden, wo es lediglich erforderlich ist als erste oder als letzte Werkstoffbahn einen Separator hinzuzufügen.

Wählt man beispielsweise die Kombination aus übereinander angeordneter Anode, Separator, Kathode, Separator, so muss zu Beginn des Anordnens des Teilstapels ein einzelner Separator eingelegt werden, da ansonsten die untenliegende Anode nicht isoliert wäre.

Wählt man hingegen die Kombination aus, bei der die Reihenfolge der übereinander angeordneten Werkstoffbahnen Separator, Anode, Separator, Kathode lautet, so ist zum Ende des Anordnens des Teilstapels ein einzelner Separator aufzulegen, weil ansonsten die obenliegende Kathode nicht isoliert wäre.

Insbesondere können beim Zuschnitt bereits an wenigstens zwei Werkstoffbahnen Ableiterfähnchen ausgebildet werden. Dies bietet sich vor allem bei den Werkstoffbahnen der Anoden und Kathoden an. Hierbei ist es möglich die Ableiter im ersten und zweiten Zuschnitt bereits vollständig und ohne zusätzlichen Aufwand auszubilden, indem lediglich eine entsprechende und geeignete Schnittkontur gewählt wird.

Insbesondere kann der nach dem vorliegenden Verfahren hergestellte Zellstapel in einem sich unmittelbar anschließenden Verfahrensschritt mit einem Verbindungsmittel, wie etwa einem Tape bzw. Klebeband zu einem Zellpaket verbunden werden. Dieser zusätzliche Schritt lässt sich besonders leicht als zusätzlicher Verfahrensschritt an das vorliegende Verfahren anschließen.

Für das automatische Anordnen ist es insbesondere vorteilhaft, wenn beim Anordnen der Teilstapel zum Zellstapel zumindest eine zusätzliche Werkstoffbahn im Zellstapel angeordnet wird. Wie bereits zuvor beschrieben, kann diese Werkstoffbahn entweder an der Unterseite des Zellpakets und damit am Beginn des Anordnens der Teilstapel oder an der Oberseite des Zellpakets und damit am Ende des Anordnens der Teilstapel in den Zellstapel eingebracht werden.

Eine Batteriezelle mit einem Zellstapel, hergestellt nach einem der vorhergehenden Patentansprüche, hat den Vorteil, dass diese kostengünstig hergestellt werden kann und einzelne Werkstoffbahnen aufgrund der automatisierten und kontinuierlichen Verarbeitung besonders positionsgenau zueinander angeordnet sind. Dies senkt die Kosten und erhöht die Lebensdauer bzw. Zuverlässigkeit der Batteriezelle.

Insbesondere gilt dies auch für ein Kraftfahrzeug mit wenigstens einer Batteriezelle nach dem vorhergehenden Patentanspruch.

Gemäß einem weiteren Aspekt wird eine Vorrichtung zur Herstellung eines Zellstapels vorgeschlagen, ausgebildet zum Ausführen des beschriebenen Verfahrens, mit wenigstens zwei Vorratseinrichtungen für wenigstens eine erste Werkstoffbahn und eine zweite Werkstoffbahn, wenigstens einer ersten und einer zweiten Schneidvorrichtung zum Zuschneiden der Werkstoffbahnen, einer Transportvorrichtung zur Förderung der Werkstoffbahnen, einer Einrichtung zum Zusammenführen der Werkstoffbahnen, und einer Stapelvorrichtung. Hier sind ein erstes Fixiermittel an einer ersten Fixierstelle und ein zweites Fixiermittel an einer zweiten Fixierstelle vorgesehen sind, wobei ein Fixiermittel zusätzlich als Nachführvorrichtung für wenigstens eine Werkstoffbahn ausgebildet ist.

Insbesondere kann auch vorgesehen werden, dass das zweite Fixiermittel als Nachführvorrichtung ausgebildet und zwischen dem ersten Fixiermittel und der Vorratseinrichtung angeordnet ist.

Weiterhin kann vorteilhafterweise vorgesehen werden, dass die Fixiermittel mit einer Antriebsvorrichtung verbunden sind und synchron mit den Werkstoffbahnen bewegbar sind.

Insbesondere können die Fixiermittel und wenigstens die zweite Schneidvorrichtung so ausgebildet sein, dass die Fixiermittel im geschlossenen Zustand die zweite Schneidvorrichtung durchlaufen können. Wodurch zu jedem Zeitpunkt eine sichere Fixierung der Werkstoffbahnen zueinander und damit eine hohe Positionsgenauigkeit der Werkstoffbahnen gewährleistet ist.

Eine besonders einfache Ausführungsform kann vorsehen, dass die Nachführvorrichtung mittels wenigstens drei gruppenweise verfahrbaren Führungselementen ausgebildet ist.

Zudem kann vorgesehen werden, dass die erste Schneidvorrichtung dazu ausgebildet ist, wenigstens eine Werkstoffbahn parallel zur Längsrichtung in eine Mehrzahl von Werkstoffbahnen aufzutrennen. Hierdurch ist es möglich auch breitere Werkstoffbahnen beispielsweise in der ersten Schneidvorrichtung zu verarbeiten. Hierbei wird vorzugsweise zunächst der gewünschte erste Zuschnitt ausgeführt und dann die Werkstoffbahn auf die benötigte Breite aufgeteilt. So können beispielsweise Werkstoffbahnen für Separatoren zugeschnitten werden, die die doppelte Breite des benötigten Separators aufweisen. Teilt man diese breite Werkstoffbahn im ersten Zuschnitt nun auf zwei Werkstoffbahnen von Separatoren auf, können diese beiden Werkstoffbahnen beispielsweise sofort im Rahmen eines Teilstapels mit zwei Elektroden und zwei Separatoren unterbrechungsfrei und fortlaufend weiterverarbeitet werden.

Die vorstehenden Erläuterungen und/oder angegebenen Eignungen der Vorrichtung bzw. des Verfahrens können wechselweise bzw. abgestimmt miteinander Anwendung finden.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen schematisch:
Fig.1: eine seitliche Schnittansicht einer ersten Schneidvorrichtung für eine Anode;
Fig. 2: eine Draufsicht auf die Schneidvorrichtung nach Figur 1;
Fig. 3: eine Draufsicht auf eine Anode nach dem ersten Zuschnitt;
Fig. 4: eine Draufsicht auf eine Kathode nach dem ersten Zuschnitt;
Fig. 5: eine seitliche Schnittansicht einer ersten Schneidvorrichtung für einen Separator;
Fig. 6: eine Draufsicht auf zwei mögliche Zuschnitte für einen Separator;
Fig. 7: eine mögliche Kombination von vier Werkstoffbahnen;
Fig. 8: eine Seitenansicht des Prozesses ab dem Zusammenführen der Werkstoffbahnen;
Fig. 9: eine Draufsicht auf vier zusammengeführte Werkstoffbahnen;
Fig. 10: die Eingriffweise der ersten Spannvorrichtung;
Fig. 11: das Schließen der ersten Spannvorrichtung;
Fig. 12: die Eingriffsweise der zweiten Spannvorrichtung;
Fig. 13: das Schließen der zweiten Spannvorrichtung;
Fig. 14: eine Seitenansicht eines Nockenantriebs;
Fig. 15: eine Schnittdarstellung durch ein Nockenrad eines Nockenantriebs;
Fig. 16: eine Draufsicht und Seitenansicht mit erster, zweiter und dritter Spannvorrichtung;
Fig. 17: eine Draufsicht auf eine zweite Schneidvorrichtung;
Fig. 18: eine Schrägansicht einer ersten Rolle einer zweiten Schneidvorrichtung;
Fig. 19: eine seitliche Schnittansicht einer zweiten Schneidvorrichtung;
Fig. 20: eine Draufsicht und Seitenansicht mit zweiter Schneidvorrichtung und zwei Magazinen;
Fig. 21: eine Seitenansicht der dritten Spannvorrichtung, der Greifmittel und eines Magazins;
Fig. 22: eine Draufsicht auf ein Förderband mit fertigem und unfertigem Zellpaket;
Fig. 23: eine Seitenansicht eines ersten Schritts zum Verkleben des Zellstapels;
Fig. 24: eine Seitenansicht eines zweiten Schritts zum Verkleben des Zellstapels;
Fig. 25: eine Seitenansicht eines dritten Schritts zum Verkleben des Zellstapels;
Fig. 26: eine Seitenansicht eines vierten Schritts zum Verkleben des Zellstapels;
Fig. 27: eine Seitenansicht auf die Ablage eines Zellpakets auf dem Förderband;
Fig. 28: eine Draufsicht auf ein fertiges Zellpaket; und
Fig. 29: eine alternative Ausführungsform einer zweiten Schneidvorrichtung.

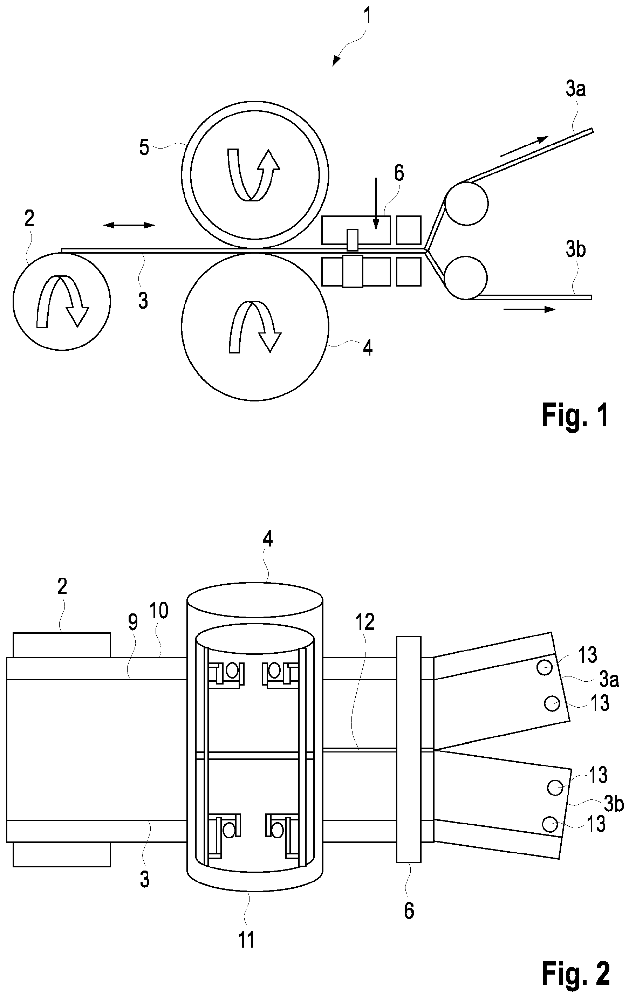

In Figur 1 ist eine erste Schneidvorrichtung 1 in einer Seitenansicht dargestellt. Auf der linken Seite der Figur 1 befindet sich eine erste Vorratseinrichtung 2, die einen Vorrat einer ersten Werkstoffbahn 3 aufweist. Die erste Vorratseinrichtung 2 kann beispielsweise eine vorproduzierte Einheit sein, die ein kalandriertes Muttercoil mit einer ersten Werkstoffbahn 3, beispielsweise für eine Anode 7 einer Batteriezelle 8, umfasst. Die kalandrierte und zu einem Coil gewickelte erste Werkstoffbahn 3 weist eine besonders gleichmäßige Schichtdicke auf und wird der ersten Schneideinrichtung 1 unter möglichst konstanten und definierten Zugkräften zugeführt, um einen Faltenwurf in der ersten Werkstoffbahn 3 zu vermeiden. Die erste Schneideinrichtung 1 besteht aus einer Unterwalze 4, einer Oberwalze 5 sowie einer Locheinheit 6. Der in der ersten Schneidvorrichtung 1 vorgenommene Zuschnitt wird nachfolgend noch näher erläutert. Bei der hier gezeigten Ausführungsform weist die erste Werkstoffbahn 3 eine Breite auf, die so gewählt ist, dass die Werkstoffbahn 3 während des Zuschnitts in Längsrichtung geteilt werden kann, sodass in der ersten Schneidvorrichtung 1 gleichzeitig zwei erste Werkstoffbahnen 3a, 3b entstehen, die nachfolgend weiterverarbeitet werden können. Alternativ zu der hier dargestellten Ausführungsform, bei der die erste Werkstoffbahn 3 eine Breite aufweist, die der doppelten Breite einer zugeschnittenen ersten Werkstoffbahn 3a, 3b entspricht, kann jedoch auch ohne weiteres eine erste Werkstoffbahn 3 verwendet werden, die der einfachen Breite oder einer mehrfachen Breite der zugeschnitten ersten Werkstoffbahn 3a, 3b entspricht. Im zweiten Fall müsste eine entsprechende Mehrzahl von Trendschnitten in Längsrichtung der Werkstoffbahn 3 vorgesehen werden. Zur Durchführung des Zuschnitts kann die Unterwalze 4 beispielsweise aus einem gehärteten Werkstoff, wie etwa Wolframkarbid oder Chromstahl, bestehen. Die Locheinheit 6 ist in Form einer Stanze ausgebildet, die dazu geeignet ist, Löcher in die jeweilige geteilte erste Werkstoffbahn 3a, 3b zu stanzen.

In Figur 2 ist die erste Schneidvorrichtung 1 nach Figur 1 in einer Draufsicht dargestellt. Von der links angeordneten ersten Vorratseinrichtung 2 wird die erste Werkstoffbahn 3 der dargestellten Unterwalze 4 nach rechts zugeführt. Die erste Werkstoffbahn 3 weist einen Anodenbereich 9 und einen Rand 10 auf. Der Anodenbereich 9 ist mit einem Werkstoff beschichtet, der für die spätere Verwendung als Anode 7 in einer Batteriezelle 8 geeignet ist. Einer sogenannten Anodenaktivschicht. Das Substrat der Anode ist vorzugsweise ein Kupferwerkstoff. Gut erkennbar ist hierbei, dass die erste Werkstoffbahn 3 doppelt so breit ist, wie die ersten Werkstoffbahnen 3a, 3b nach dem ersten Zuschnitt. Die Unterwalze 4 weist ein Rotationsmesser 11 auf, dass einen Längsschnitt 12 mittig in die Werkstoffbahn 3 einbringt. Nachfolgend erzeugt die Locheinheit 6 Aufnahmelöcher 13, die eine definierte Anfangsstelle der Werkstoffbahn 3 bzw. der geteilten Werkstoffbahn 3a, 3b bilden.

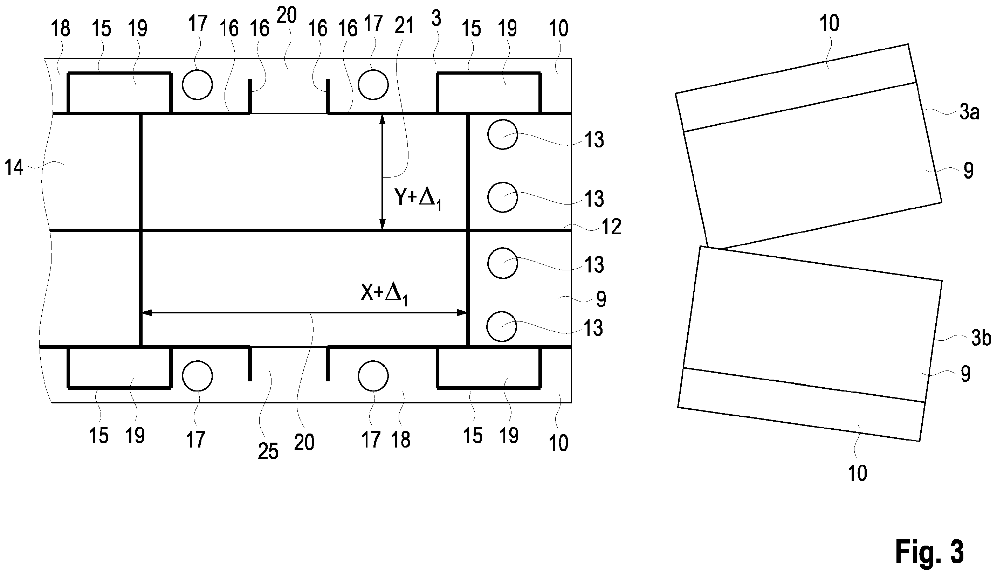

Die Figur 3 zeigt eine alternative Ausführungsform der Erfindung, bei der die erste Schneidvorrichtung 1 einen komplexeren Zuschnitt der ersten Werkstoffbahn 3 ausführt. Bei dieser Ausführungsform sind neben dem Längsschnitt 12, der longitudinal verläuft, ein transversal verlaufender Trennschnitt 14, ein Fensterschnitt 15, ein zweiteiliger Ableiterschnitt 16 sowie Transportlöcher 17 durch die erste Schneidvorrichtung 1 im Verlauf des ersten Zuschnitts in die erste Werkstoffbahn 3 eingebracht worden. Hierzu ist es lediglich erforderlich das in der Unterwalze 4 angeordnete Rotationsmesser 11 mit einer entsprechenden Schneidkontur auszugestalten.

Hierbei ist es wichtig, dass der Rand 10 in transversaler Richtung an keiner Stelle vollständig durchtrennt wird. Nur durch eine durchgehende Verbindung kann der Rand 10 seine Funktion als Transportabschnitt 18 ausüben und Zugkräfte in Längsrichtung der ersten Werkstoffbahn 3 aufnehmen und übertragen. Solche Transportkräfte können beispielsweise mittels Rollen auf den Transportabschnitt 18 übertragen werden. Alternativ können aber auch mechanische Elemente in die Transportlöcher 17 eingreifen und so die erste Werkstoffbahn 3 kontinuierlich, schnell, unterbrechungsfrei und mit hoher Präzision fördern.

Weiterhin sind mit den Fensterschnitten 15 eingebrachte Fenster 19 für die Erfindung von Bedeutung, da durch diese Fenster 22 ein Beschnitt von darunter bzw. darüber liegenden Werkstoffbahnen möglich wird.

Der an dieser Stelle bereits eingebrachte Trennschnitt 14 ist in der Längsrichtung 20 in einem Abstand von X + Δ₁ eingebracht. Dies bedeutet die später fertig gestellte Anode 7 wird eine Länge von X + Δ₁ aufweisen. Entsprechend wird eine Breite 21 der Anode 7 ein Maß von Y + Δ₁ aufweisen, welches im Wesentlichen der Breite des vom Rand 10 entfernte und innenliegenden Abschnitts des Ableiterschnitts 16 entspricht. Die beiden in einem Transportabschnitt 18 nebeneinander angeordneten transversalen Abschnitte der Ableiterschnitte 16 definieren bereits die Breite eines später zu erzeugenden Ableiters 25 der Elektrode, die in diesem Fall eine Anode 7 ist. Während die Aufnahmelöcher 13 nur bei einem erstmaligen Anlegen einer Werkstoffbahn 3 benötigt werden, können die Transportlöcher 17 fortlaufend, d. h. während des gesamten Herstellungsprozesses, sowohl für die Übertragung von Antriebskräften, als auch zur sehr präzisen Positionierung der Werkstoffbahn 3 genutzt werden.

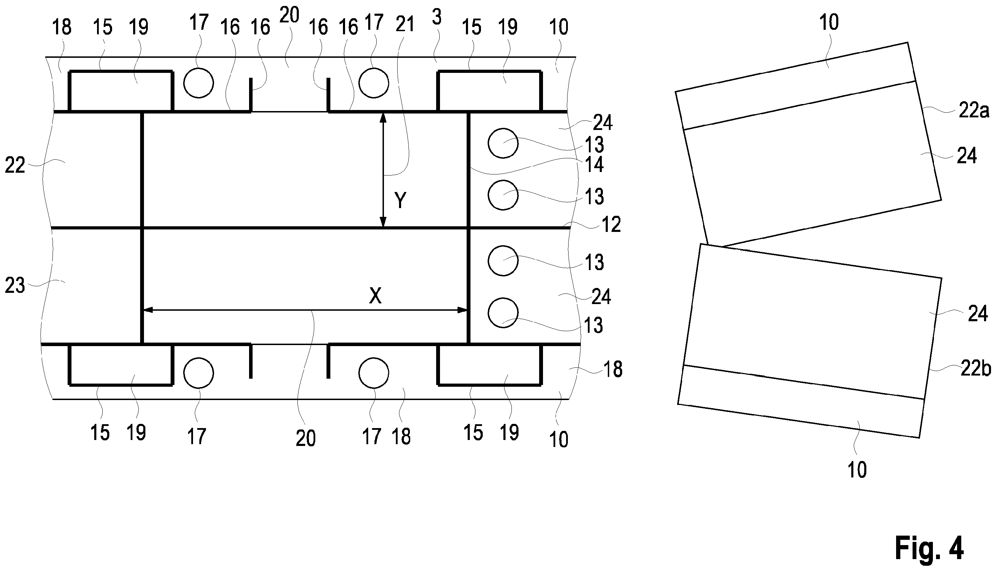

Die Figur 4 zeigt eine zweite Werkstoffbahn 22, die einen ersten Zuschnitt erfährt, der im Wesentlichen mit dem in Figur 3 erläuterten Zuschnitt übereinstimmt. Der Unterschied bei der in dieser Figur dargestellten Ausführungsform besteht darin, dass es sich um eine Kathode 23 handelt. Dazu wird die zweite Werkstoffbahn 22 zunächst der ersten Schneidvorrichtung 1 von einer zweiten Vorratseinrichtung 26 zugeführt. Hierbei ist es besonders effizient, wenn mehrere erste Schneidvorrichtungen parallel genutzt werden, um beispielsweise an ersten Werkstoffbahnen 3 von Anoden 7 und zweiten Werkstoffbahnen 22 von Kathoden 23 gleichzeitig den ersten Zuschnitt auszuführen. Um als Kathode 23 verwendet zu werden, sind der Transportabschnitt 18 mit dem Rand 10 und ein Kathodenbereich 24 aus entsprechenden Werkstoffen gefertigt, die für eine Kathode 23 einer Batteriezelle 8 geeignet sind. Hierfür kommt beispielsweise ein aluminiunhaltiges Substrat als Träger für ein Kathodenaktivmaterial in Betracht. Ein weiterer Unterschied zur Anode 7 besteht darin, dass die Länge der Kathode 23 in Längsrichtung 20 und deren Breite 21 geringfügig kleiner ist. als die Länge in Längsrichtung 20 und die Breite 21 der Anode 7 gemäß Figur 3. Bei den dargestellten Ausführungsformen ist die Anode 7 um das Differenzmaß Δ₁ größer als die Kathode 23. Dies trifft sowohl in Längsrichtung 20 als auch in Richtung der Breite 21 zu.

Die nach dem ersten Zuschnitt entstandenen separaten zweiten Werkstoffbahnen 22a, 22b können danach unmittelbar und separat voneinander weiterbearbeitet werden.

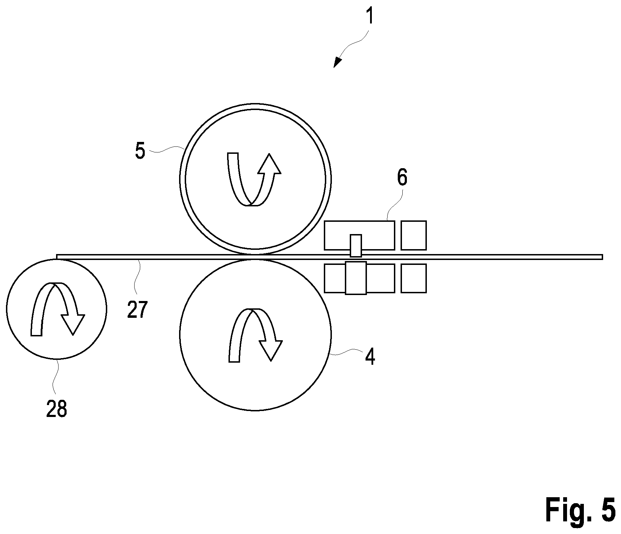

In Figur 5 ist eine weitere erste Schneidvorrichtung 1 dargestellt, der eine dritte Werkstoffbahn 27 von einer dritten Vorratseinrichtung 28 zugeführt wird. Bei der dritten Werkstoffbahn 27 handelt es sich um einen Separator 29, der isolierende Eigenschaften aufweist und dazu geeignet ist Anoden 7 und Kathoden 23 elektrisch voneinander zu isolieren. Die dritte Werkstoffbahn 27 wird wiederum mittels einer Unterwalze 4 und einer Oberwalze 5 einem ersten Zuschnitt unterzogen. Ebenfalls vorgesehen ist eine Locheinheit 6 zur Ausbildung von Aufnahmelöchern 13.

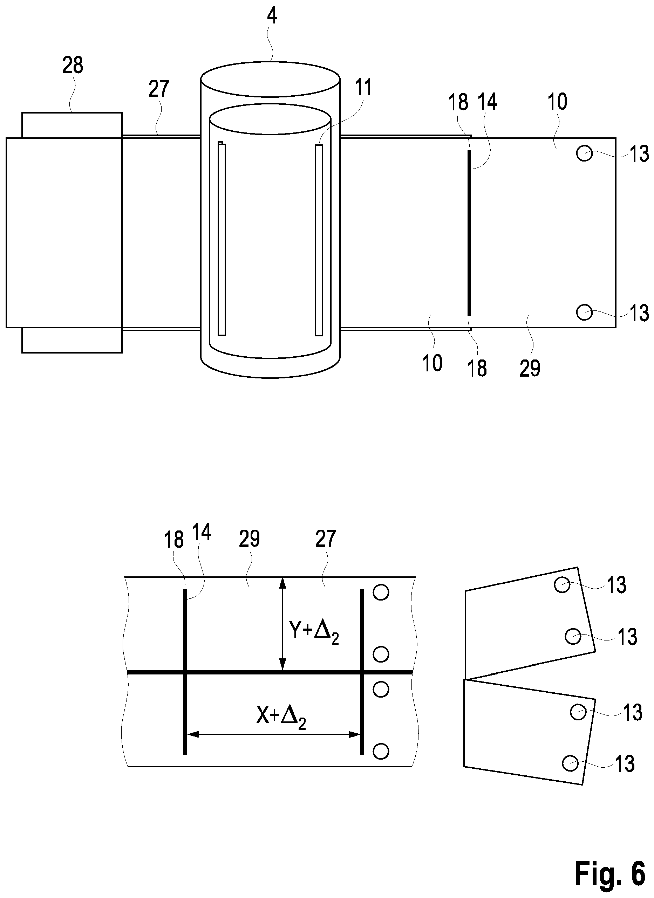

Die Figur 6 zeigt im oberen Bereich eine Unteransicht auf die Unterwalze 4, wobei die Locheinheit 6 nicht dargestellt ist. In der Unterwalze 4 ist bei dieser Ausführungsform ein Rotationsmesser 11 vorgesehen, dass dazu ausgebildet ist an definierten Stellen der dritten Werkstoffbahn 27 transversale Trennschnitte 14 einzubringen, wobei sich jedoch diese Trennschnitte 14 nicht über die gesamte Breite der dritten Werkstoffbahn 27 erstrecken, sondern einen Rand 10 aussparen. Hierdurch entstehen in dem Rand 10 auf beiden Seiten der dritten Werkstoffbahn 27 Transportabschnitte 18, die Zugkräfte aufnehmen können, wodurch eine weitere mechanische Verarbeitung der dritten Werkstoffbahn 27 im kontinuierlichen und nicht durchtrennten Zustand möglich wird. Weiterhin wurden von der in dieser Figur nicht dargestellten Locheinheit 6 Aufnahmelöcher 13 in die dritte Werkstoffbahn 27 eingebracht.

Im unteren Bereich der Figur 6 ist eine Variante dargestellt, bei der die dritte Werkstoffbahn 27 doppelt so breit ist, wie die für die Batteriezelle 8 benötigte Breite des Separators 29. In diesem Fall kann die Unterwalze 4 beispielsweise so ausgebildet werden, dass sie zusätzlich zu dem transversalen Trennschnitt 14 einen longitudinal verlaufenden Längsschnitt 12 ausführt und die dritte Werkstoffbahn 27 der Länge nach in zwei Hälften aufteilt. Für einen sicheren Betrieb einer Batteriezelle 8 ist es vorteilhaft, wenn der Separator 29 größer ist als die zu isolierende Anode 7 bzw. Kathode 23. Von daher wird der Separator 29 ausgehend von den zuvor beschriebenen Basismaßen X und Y der Kathode 23 auf eine Breite von Y + Δ₂ und eine Länge von X+ Δ₂ zugeschnitten. Hierbei stellt Δ₂ das Übermaß dar, um welches der Separator 29 größer sein soll als die Kathode 23.

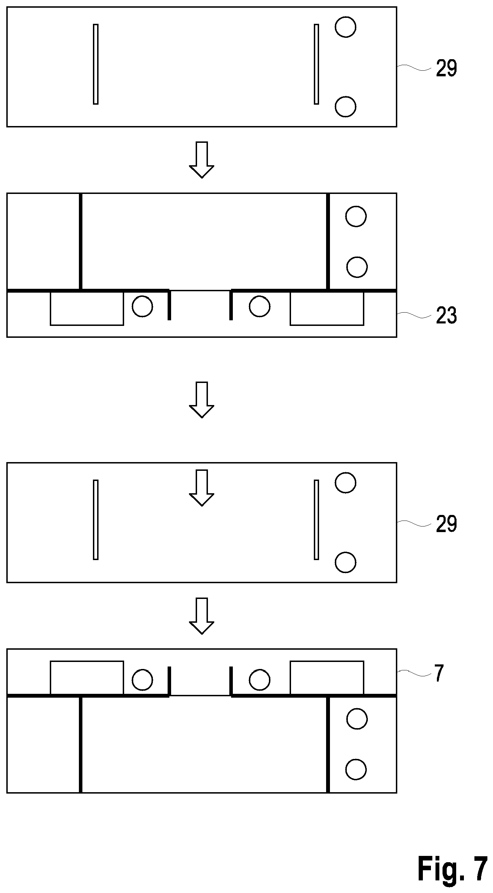

In Figur 7 sind vier Werkstoffbahnen dargestellt, die zu einem Teilstapel übereinander zusammengeführt werden sollen. Es handelt sich dabei von unten nach oben um eine Anode 7, einen Separator 29, eine Kathode 23 sowie nochmals einen Separator 29. Alle Werkstoffbahnen haben in dem dargestellten Zustand bereits einen ersten Zuschnitt erfahren.

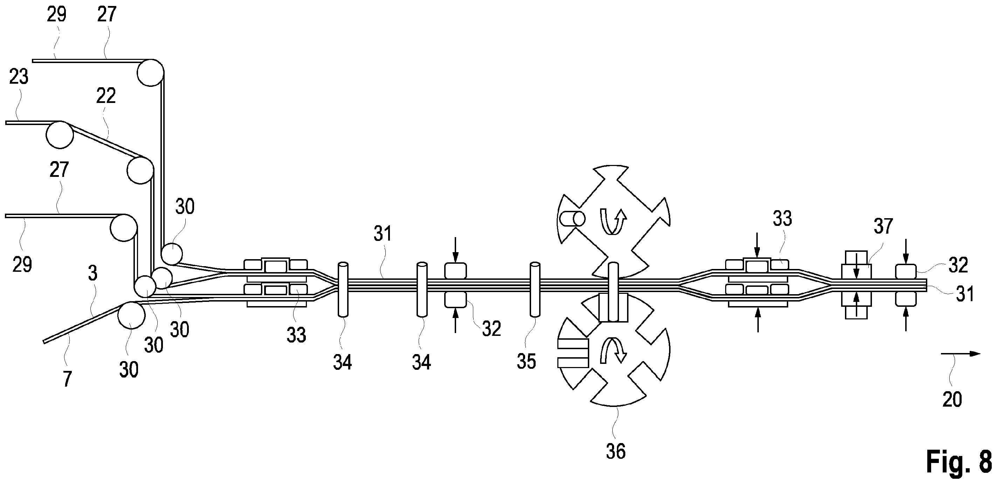

In Figur 8 wird der nachfolgende Verfahrensschritt in einer seitlichen Ansicht dargestellt. Von links kommend werden jeweils im Zustand nach dem ersten Zuschnitt eine erste Werkstoffbahn 3 eine zweite Werkstoffbahn 22 sowie zwei dritte Werkstoffbahn 27 in der Weise zugeführt, dass eine dritte Werkstoffbahn 27 zwischen der ersten Werkstoffbahn 3 und der zweiten Werkstoffbahn 22 angeordnet ist und eine weitere dritte Werkstoffbahn über der zweiten Werkstoffbahn 22. Die vier Werkstoffbahnen 3, 27,22 werden dabei über Führungsmittel 30 zu einem Teilstapel 31 zusammengeführt. Hierbei greift am rechten Ende des Teilstapels 31 eine erste Spannvorrichtung 32 und am linken Ende des Teilstapels 31 eine zweite Spannvorrichtung 33 an. Die Funktionsweise der Spannvorrichtungen 32 und 33 wird nachfolgend noch eingehender erläutert. Ein Weitertransport des Teilstapels 31 in Längsrichtung 20 wird durch Transportstifte 34 erreicht, die in die Transportlöcher 17 der ersten Werkstoffbahn 3 und der zweiten Werkstoffbahn 22 eingreifen. Die Transportstifte 34 werden von einer nicht dargestellten Antriebseinrichtung angetrieben und üben eine Antriebskraft auf den jeweiligen Transportabschnitt 18 aus. Für ein erstmaliges Anlegen einer Werkstoffbahn sind zudem Aufnahmestifte 35 vorgesehen, die in die Aufnahmelöcher 13 eingreifen und so abgestimmt sind, dass die neu anzulegende Werkstoffbahn und deren Schnittkontur aus dem ersten Zuschnitt in einer definierten Lage präzise zugeführt wird. Im weiteren Verlauf schließt sich daran ein Nockenantrieb 36 an, der einerseits dazu ausgelegt ist die Transportstifte 34 bzw. die Aufnahmestifte 35 anzutreiben und andererseits einen problemlosen Durchlauf der ersten Spannvorrichtung 32 und der zweiten Spannvorrichtung 33 in die weiter rechts dargestellte Position erlaubt, wo eine dritte Spannvorrichtung 37 an den Teilstapel 31 angelegt wird.

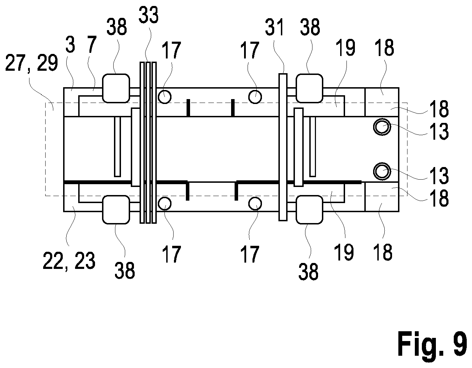

Die darüber dargestellte Figur 9 zeigt den Teilstapel 31 nach Figur 8 nochmals in einer Draufsicht. Gut erkennbar sind dabei die erste Spannvorrichtung 31 und die zweite Spannvorrichtung 33. Hierbei ist auch deutlich zu erkennen, dass die Transportabschnitte 18 der Anode 7, der Kathode 23 und der Separatoren 29 in transversale Richtung, d. h. in Querrichtung, versetzt angeordnet sind. Dies führt insbesondere dazu, dass der Transportabschnitt 18 der Separatoren 29 vollständig innerhalb der Fenster 19 in der Anode 7 bzw. in der Kathode 23 liegen. Um ständig eine korrekte transversale Ausrichtung der Werkstoffbahnen zu gewährleisten ist eine Überwachungsvorrichtung 38 vorgesehen, die beispielsweise als Lageerkennung oder optische Bahnkantenregelung zur Breitenkontrolle des Separators 29 ausgebildet sein kann

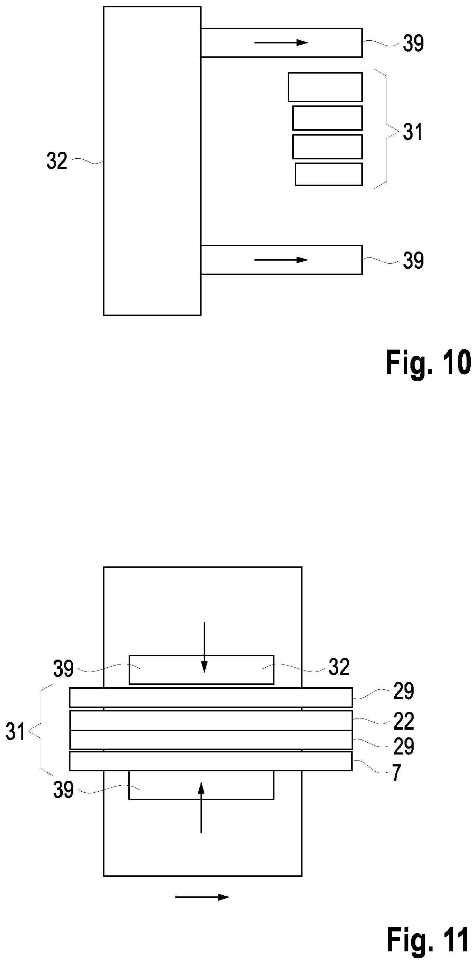

Die Figur 10 zeigt die erste Spannvorrichtung 32 in einer Schnittansicht in Längsrichtung 20 des Teilstapels 31. Beim Anlegen der ersten Spannvorrichtung 31 werden zwei Greifer 39 oberhalb und unterhalb des Teilstapels 31 in Position gebracht.

In Figur 11 ist die erste Spannvorrichtung 32 dann in einem geschlossenen Zustand dargestellt, bei dem die Greifer 39 aufeinander zu verfahren sind und dabei den Teilstapels 31 fest verspannen. Hierdurch ist gewährleistet, dass keine Relativbewegung zwischen den Werkstoffbahnen 3, 22, 27 bei der nachfolgenden Bearbeitung auftreten kann.

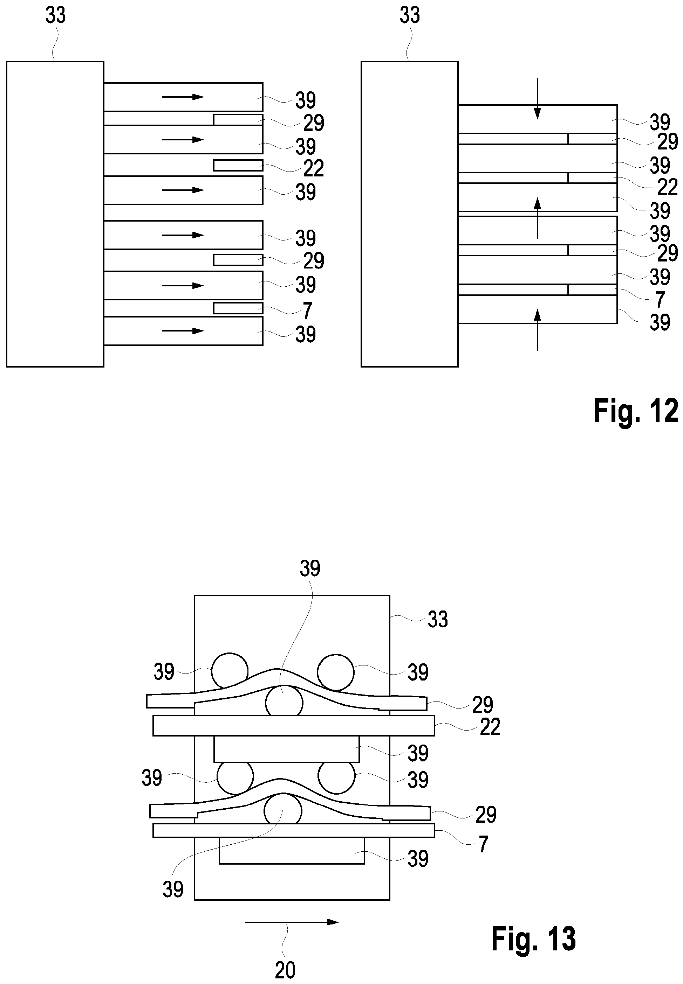

Die Figur 12 zeigte die zweite Spannvorrichtung 33 auf der linken Seite in einem geöffneten Zustand und auf der rechten Seite in einem geschlossenen Zustand. Beim Ansetzen der zweiten Spannvorrichtung 33 werden mehrere Greifer 39 von der Seite kommend zwischen die Werkstoffbahnen 3, 22, 27 eingeschoben. Nachdem dies erfolgt ist, werden die Greifer 39 wiederum aufeinander zu bewegt, um die zweite Spannvorrichtung 33 zu schließen.

Wie in Figur 13 dargestellt ist, sind die Greifer 39 bei dieser Ausführungsform der zweiten Spannvorrichtung 33 unterschiedlich ausgebildet. So gibt es Greifer 39 mit einem runden Querschnitt und Greifer 39 mit einem rechteckigen Querschnitt. Werden nun die Greifer 39 zueinander verfahren, so werden die runden Greifer 39 von der jeweils dazwischenliegenden Werkstoffbahn, in diesem Fall sind es die beiden dritten Werkstoffbahnen 27 der Separatoren 29, in zunehmendem Maße umschlungen. Hierdurch tritt der Effekt ein, dass die für diese Umschließung benötigte zusätzliche Weglänge der dritten Werkstoffbahnen 27 von außen nach geführt wird. Schließt man nun zuerst die erste Spannvorrichtung 32 und anschließend die zweite Spannvorrichtung 33, so wird das lose Ende der dritten Werkstoffbahn 27, welches am hinteren linken Ende des Teilstapels 31 liegt, in Längsrichtung 20 nachgeführt und damit nach vorne bzw. nach in der Bildebene nach rechts gezogen.

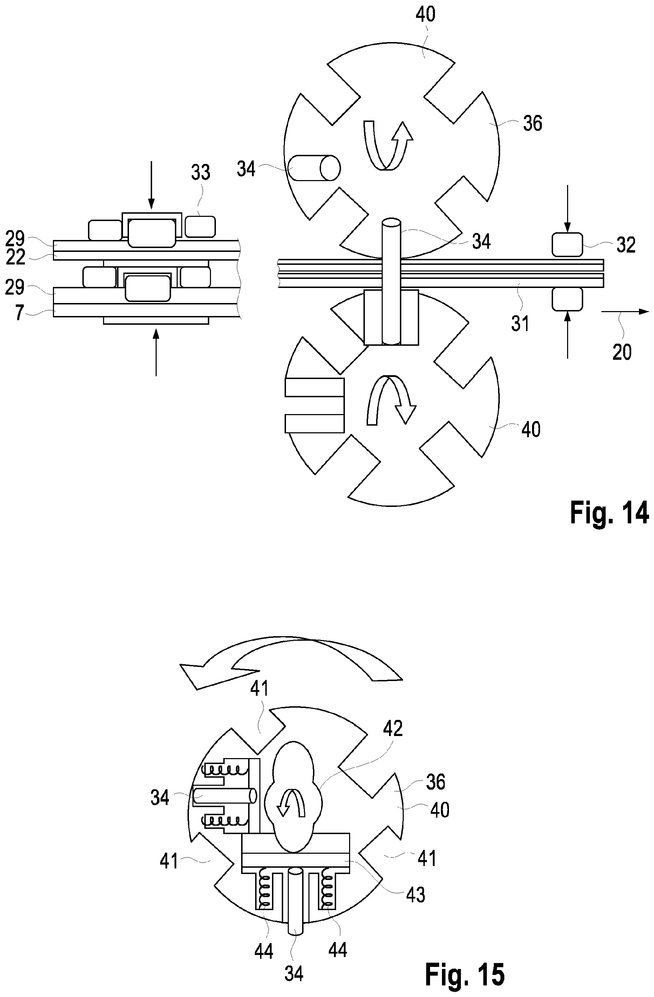

Die Figur 14 zeigt den Teilstapel 31 mit den nachgeführten Separatoren 29 beim Passieren des Nockenantriebs 36. Der Transportstift 34 ist dabei ausgefahren und steht mit einem gegenüberliegenden Nockenrad 40 und dem Teilstapel 31 im Eingriff. Durch die Drehung der beiden Nockenräder 40 des Nockenantriebs 36 wird der Teilstapel 31 in Längsrichtung 20 weiter gefördert. Ein zweiter Transportstift 34 ist in dem oberen Nockenrad 40 in einem eingezogenen Zustand dargestellt und steht noch nicht mit dem Teilstapel 31 im Eingriff.

In Figur 15 ist ein Nockenrad 40 eines Nockenantriebs 36 in einer Schnittdarstellung gezeigt. Das Nockenrad 40 weist ausfahrbare Transportstifte 34 und Ausnehmungen 41 auf. Während die Transportstifte 34 dazu dienen in die Transportlöcher 17 der Werkstoffbahnen einzugreifen, dienen die Ausnehmungen 41 dazu, dass die erste Spannvorrichtung 32 und die zweite Spannvorrichtung 33 das Nockenrad 40 problemlos durchlaufen können. Das Aus-bzw. Einfahren der Transportstifte 34 kann in besonders einfacher Weise mittels einer Kurvenbahn 42 gesteuert werden, indem eine mit dem Transportstifte 34 verbundene Platte 43 mittels Federn 44 gegen die Kurvenbahn 42 gedrückt wird. Hierbei ist die Kurvenbahn 42 so ausgebildet, dass der Transportstifte 34 genau dann ausgefahren wird, wenn im Laufe der Drehbewegung des Nockenrads 40 die Eingriffsmöglichkeit in ein Transportloch 17 besteht.

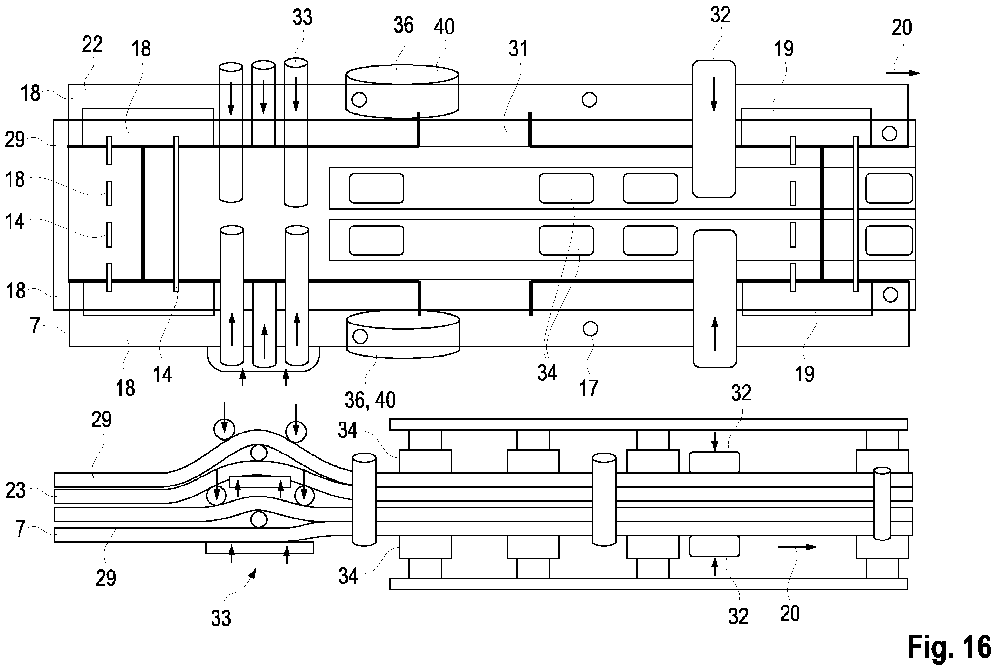

Die Figur 16 zeigt den Teilstapel 31 beim Durchlaufen des Nockenantriebs 36 in einer Draufsicht und einer Seitenansicht. Hierbei sind die erste Spannvorrichtung 32 und die zweite Spannvorrichtung 33 gesetzt. Der transversale Trennschnitt 18 in den Separatoren 29 ist dabei einmal gestrichelt und einmal als volle Linie dargestellt. Die gestrichelte Linie zeigt die Lage des Trennschnitts 18 vor dem Anlegen der ersten Spannvorrichtung 32 und der zweiten Spannvorrichtung 33. Hierbei wurde zunächst die erste Spannvorrichtung 32 angelegt und anschließend die zweite Spannvorrichtung 33. Hierdurch konnte die beim Anlegen der zweiten Spannvorrichtung 33 benötigte zusätzliche Weglänge der Separatoren 29 nur von der linken Seite her, d. h. von der dritten Vorratseinrichtung 28 nach geführt werden. Entsprechend dieser zusätzlich nachgeführten Weglänge ist der gestrichelt dargestellte Trennschnitt 18 nach rechts auf die Position des als volle Linie dargestellten Trennschnitts 18 gewandert. Dies bedeutet, dass im kontinuierlichen Herstellungsprozess eine größere Länge der dritten Werkstoffbahn 27 abgegeben wird, als die von der ersten Vorratseinrichtung 2 und der zweiten Vorratseinrichtung 26 abgegebenen Längen der ersten Werkstoffbahn 3 und der zweiten Werkstoffbahn 22. Hierdurch wird es möglich, dass der Separator 29 im fertigen Zustand nicht nur in transversale Richtung über die Anode 7 und die Kathode 23 hinausragt, sondern auch in Längsrichtung 20 über diese hinausragt und somit eine sichere und zuverlässige Isolation gewährleistet. Im unteren Bereich der Figur 16 ist nochmals eine Seitenansicht dieses oben dargestellten Abschnitts gezeigt. Gut erkennbar ist hierbei, wie die zweite Spannvorrichtung 33 im gesetzten Zustand die Weglängen der Separatoren 29 vergrößert. Auch in dieser Ansicht ist gut erkennbar, dass die Transportabschnitte 18 der drei Werkstoffbahnen 3, 22, 27 in transversale Richtung klar voneinander separiert angeordnet sind. Zudem ist auch hier der Transportabschnitt 18 der Separatoren 29 soweit innenliegend, d. h. vom Rand 10 entfernt, angeordnet, dass dieser innerhalb der Fenster 19 liegt. Die seitlich, d. h. in transversaler Richtung, versetzte Anordnung der Transportabschnitte 18 hat hierbei mehrere Vorteile. So können die Transportstifte 34 auf einer Seite in die Transportlöcher 17 der Anode 7 eingreifen und auf der gegenüberliegenden Seite in die Transportlöcher 17 der Kathode 22. Beide Werkstoffbahnen 3, 22 können hierdurch synchron angetrieben werden, indem die dafür erforderlichen Antriebskräfte, die in der Regel als Zugkräfte eine Werkstoffbahn 3, 22, 27 eingeleitet werden, an die Werkstoffbahnen 3, 22 übertragen werden.

Ein weiterer Vorteil der seitlich versetzten Anordnung der Transportabschnitte 18 kann erzielt werden, wenn der Transportabschnitt 18 einer Werkstoffbahn 3, 22 ,27, wie beispielsweise der Transportabschnitt 18 des Separators 29, so angeordnet wird, dass dieser über wenigstens einem Fenster 19 der benachbarten Werkstoffbahnen 3, 22, wie beispielsweise der Anode 7 oder der Kathode 23 liegt. Bei dieser Ausführungsform ist es möglich den Separator 29, an einer beliebigen Stelle innerhalb des Fensters 19 zu trennen. Genauer gesagt wird dazu dessen Transportabschnitt 18 an dieser innerhalb des Fensters 19 frei wählbaren Position in transversaler Richtung durchtrennt. Hierzu muss lediglich der im ersten Zuschnitt von der ersten Schneidvorrichtung 1 in den Separator 29 eingebrachte Trennschnitt 14 entsprechend innerhalb des Fensters 19 positioniert werden. Ist dies, wie in der Figur gezeigt erfolgt, kann der nun noch im Separator bestehende Transportabschnitt 18 sehr einfach dadurch transversal durchtrennt werden, indem der Trennschnitt 18 bis zum seitlichen Rand des Separators 29 verlängert wird. Dies kann sehr einfach mittels einer zweiten Schneidvorrichtung 45 durchgeführt werden, die beispielsweise als Rollstanz- oder Rollschneidvorrichtung ausgebildet ist. Im Rahmen dieses zweiten Zuschnitts ist es dann insbesondere auch möglich noch weitere Schnitte aufzuführen, wie beispielsweise das Freischneiden der Ableiter 25 durch Verlängerung des Ableiterschnitts 16 bis zum Rand oder das Abtrennen der seitlichen Transportabschnitte 18 von Anode 7 und Kathode 23 durch einen Schnitt in Längsrichtung des Teilstapels 31.

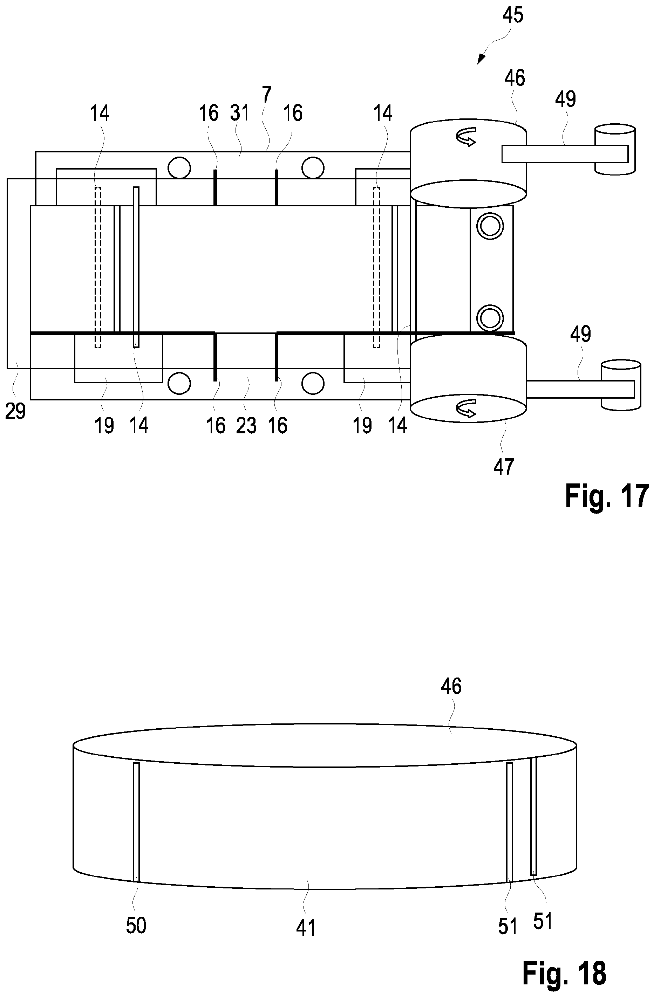

In Figur 17 ist eine zweite Schneidvorrichtung 45 in einer Draufsicht dargestellt. Mittels dieser zweiten Schneidvorrichtung 45 wird ein zweiter Zuschnitt ausgeführt, bei dem der Teilstapel 31 nun auch in transversale Richtung aufgetrennt wird. Hierbei werden die bis zu diesem Punkt verwendeten Transportabschnitte 18 abgetrennt. In dem hier dargestellten Zustand wird der Teilstapel 31 gleichzeitig von den hier nicht dargestellten ersten, zweiten und dritten Spannvorrichtungen 32, 33, 37 gehalten. Der Trennschnitt 14 ist dabei aufgrund der gesetzten zweiten Spannvorrichtung 33 von der gestrichelten Linie gezeigten Ausgangsposition in die mit der vollen Linie dargestellten Position nach rechts verschoben.

Die zweite Schneidvorrichtung 45 weist eine erste Rolle 46 und eine zweite Rolle 47 auf, die mit jeweils einer Gegenrolle 48 zusammenwirken. Hierbei beschneidet die erste Rolle 46 die Anode 7 und eine Seite der Separatoren 29. Die zweite Rolle 47 beschneidet die Kathode 23 und die andere Seite der Separatoren 29. Der Beschnitt der Separatoren 29 erfolgt, indem im Bereich der Fenster 19 der Trennschnitt 14 druch den Separator 29 transversal verlängert wird, sodass aus den endlosen Separatoren 29 nun in Längsrichtung unterteilte einzelne Separatoren 29 entstehen. Durch das Fenster 19 ist es erst möglich den Separator 29 getrennt von den Elektroden zu beschneiden.

Ferner werden die Anode 7 und die Kathode 23 fertigbeschnitten, indem die jeweiligen Ableiterschnitte 16 von der ersten Rolle 46 bzw. von der zweiten Rolle 47 entweder transversal nach außen zum Rand 10 hin verlängert bzw. durch einen in longitudinaler Richtung verlaufenden Längsschnitt durchtrennt werden. Durch den Längsschnitt werden dann Streifen 49 abgetrennt. Beide Schnitte, d.h. in transversaler Richtung und in longitudinaler Richtung können auch gleichzeitig ausgeführt werden.

Die Figur 18 zeigt die erste Rolle 46 in einer vergrößerten Darstellung. Die Rolle 46 weist dabei Ausnehmungen 41 auf, so dass die erste und zweite Spannvorrichtung diese problemlos passieren können. Zudem sind Separatormesser 50 zum Verlängern der Trennschnitte 14 in den Separatoren 29 und Ableitermesser 50 zum Verlängern der Ableiterschnitte 16 vorgesehen.

Zudem kann an einer der Rollen 46, 47, 48 ein radial angeordnetes Messer vorgesehen werden, um die Streifen 49 im gleichen Arbeitsgang abzutrennen.

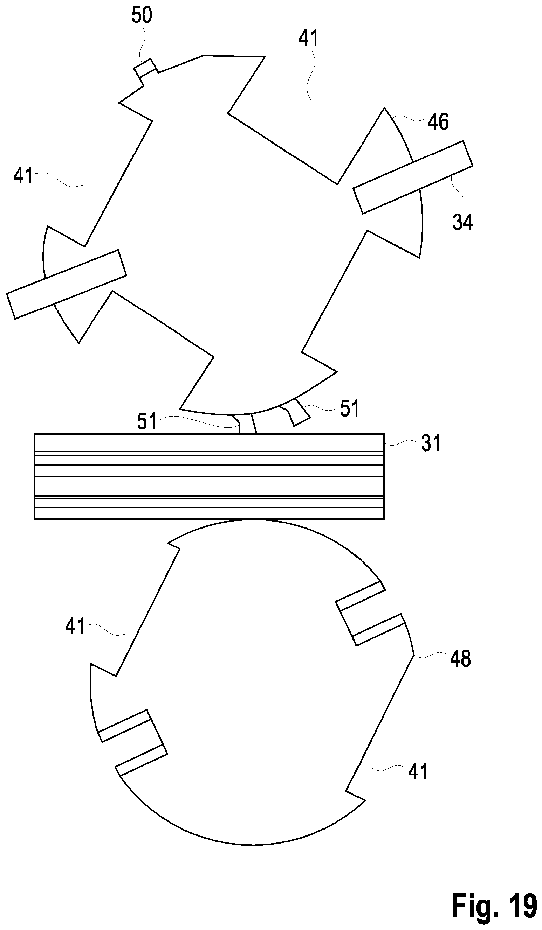

In Figur 19 ist noch einmal die erste Rolle 46 zusammen mit der Gegenrolle 48 dargestellt, zwischen denen sich ein Teilstapel 31 befindet. Sowohl die Gegenrolle 48 als auch die erste Rolle 46 weisen Ausnehmungen 41 auf, um ein problemloses Durchlaufen der ersten Spannvorrichtung 32 und der zweiten Spannvorrichtung 33 zu gewährleisten. Zudem weist die erste Rolle 46 Transportstifte 34 auf, die in die Transportabschnitte 18 der Anode 7 bzw. Kathode 23 eingreifen und für einen sicheren Transport sorgen, solange die Transportabschnitte 18 noch nicht abgetrennt sind. Zur Durchführung des zweiten Zuschnitts weist die erste Rolle 46 ein Separatormesser 50 und zwei Ableitermesser 51 auf, mit denen der Trennschnitt 14 in den Separatoren 29 verlängert und die Ableiter 25 freigestellt werden können.

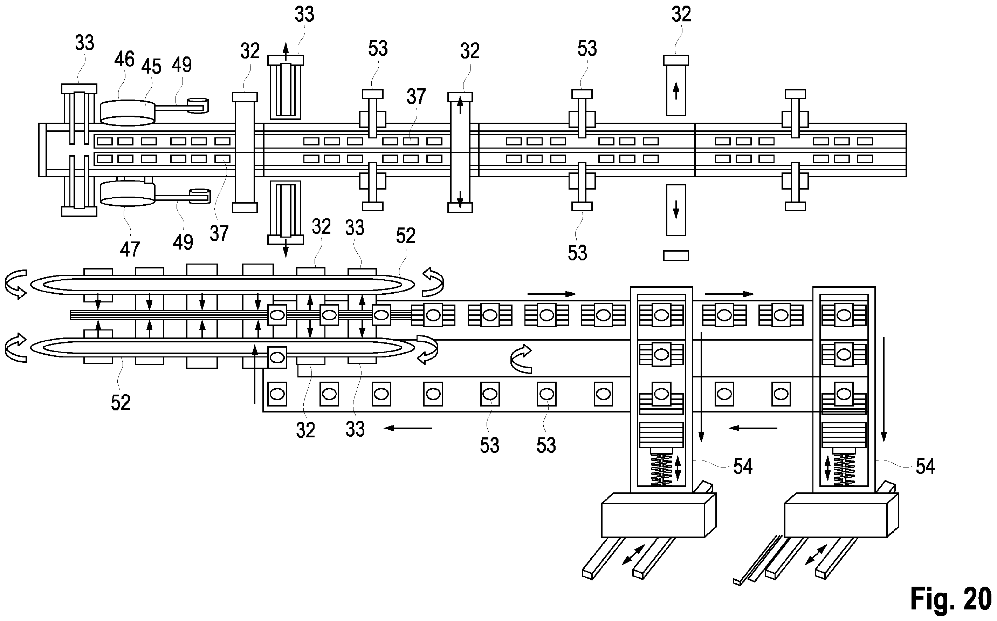

In Figur 20 ist eine Draufsicht auf die zweite Schneideinrichtung 45 dargestellt. Dabei ist von links nach rechts betrachtet zunächst die dritte Spannvorrichtung 37 gleichzeitig mit der ersten Spannvorrichtung 32 und der zweiten Spannvorrichtung 33 aktiviert. Im weiteren Verlauf der Bewegung des Teilstapels 31 nach rechts, werden dann zunächst die zweite Spannvorrichtung 33 und danach die erste Spannvorrichtung 32 gelöst, so dass sich die nachgeführten Separatoren 29 aus der umschlungenen Stellung in der zweiten Spannvorrichtung 33 zurück in eine flache Lage und parallel zur Anode 7 bzw. Kathode 22 bewegen können. Hierbei bewegen sich dann die in Längsrichtung 20 betrachtet hinteren Trennschnitt 14 der Separatoren 29 vom jeweiligen Ableiter 25 weg und ragen dadurch sicher auch in Längsrichtung 20 über die Anode 7 bzw. Kathode 22 hinaus.

Nach dem Lösen der ersten Spannmittel 32 und der zweiten Spannmittel 33 werden diese dann mittels Förderbändern 52 zurück in ihre Ausgangsposition verfahren, wo sie erneut an einen Teilstapel 31 angesetzt werden können. Gleichzeitig werden Greifmittel 53 an die Teilstapel 31 angelegt, um diese nach dem Lösen der dritten Spannmittel 37 zu Magazinen 54 weitertransportieren und dort stapeln zu können. Auch die Greifmittel 53 arbeiten, wie auch die Spannvorrichtungen 32, 33 und 37 in einem umlaufenden Verfahren, um eine schnelle und kontinuierliche Fertigung der Zellstapel 57 zu ermöglichen.

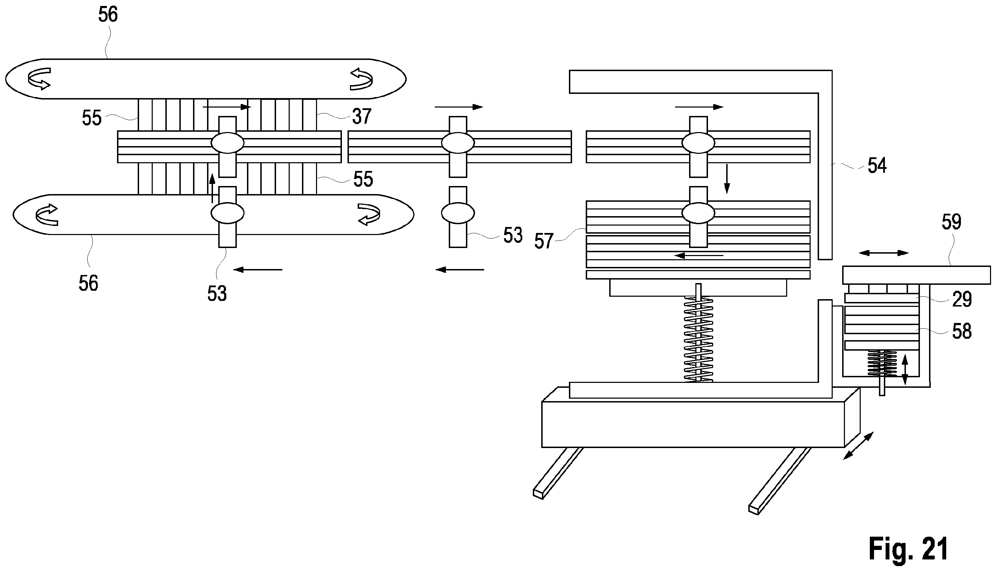

Die Figur 21 zeigt die dritte Spannvorrichtung 37 in einer Seitenansicht. Auch die dritte Spannvorrichtung 37 weist eine Mehrzahl von Spannelementen 55 auf, die an einem zweiten Förderband 56 befestigt sind, wobei sich das zweite Förderband 56 mit der gleichen Geschwindigkeit bewegt, mit der die Teilstapel 31 von der ersten Spannvorrichtung 32 und der zweiten Spannvorrichtung 33 übergeben werden. Nach der Übergabe der Teilstapel 31 an die Greifmittel 53, werden die Spannelemente 55 dann nach unten bzw. oben hinwegbewegt und in einer gegenläufigen Bewegung wieder nach links bewegt, um dort erneut an nachfolgende Teilstapel 31 angesetzt zu werden. Als nächsten Schritt führen die Greifmittel 53 die Teilstapel 31 einem Magazin 54 zu, wo mehrere Teilstapel 31 zu einem Zellstapel 57 übereinandergestapelt werden.

Da die Teilstapel 31 aus vier Werkstoffbahnen bestehen, die eine Anode 7, einen Separator 29, eine Kathode 22 und einen weiteren Separator 29 umfassen und von unten nach oben in dieser Reihenfolge übereinander angeordnet sind, wird in das leere Magazin 54 zunächst ein einzelner Separator 29 eingelegt. Dies dient dazu, einen elektrischen Kontakt der im Teilstapel 31 unten liegenden Anode 7 mit anderen Bauteilen durch diesen einzelnen Separator 29 zu vermeiden. Zu diesem Zweck wird am Magazin 54 ein Vorrat von einzelnen Separatoren 29 in einer Aufnahme 58 vorgehalten. Eine Zuführvorrichtung 59 legt dabei jedes Mal, wenn damit begonnen wird eine leeres Magazin 54 zu befüllen, beispielsweise mittels eines Saughebers, als erste Werkstoffbahn einen Separator 29 in das Magazin 54 ein. Sobald der Zellstapel 57 komplettiert ist, wird das Magazin 54 verschoben und durch eine weiteres leeres Magazin 54 ersetzt. Während dieses zweite Magazin 54 befüllt wird, kann der Zellstapel 57 in dem ersten Magazin 54 zu einem Zellpaket 60 gebunden und danach abtransportiert werden. Bei höheren Fertigungsgeschwindigkeiten können auch mehrere Magazine 54 eingesetzt werden. Hierzu können beispielsweise zwei zusätzliche Magazine 54 angeordnet werden, die parallel zu den ersten beiden Magazinen angeordnet sind und mittels weiterreichender Greifmittel 53 mit Teilstapeln 31 befüllbar sind. Wobei auch die zusätzlichen Magazine 54 im leeren Zustand von der Zuführvorrichtung 59 mit einem Separator 29 vorbestückbar sind. Hierdurch kann die Fertigung unterbrechungsfrei und mit hoher Geschwindigkeit fortlaufen.

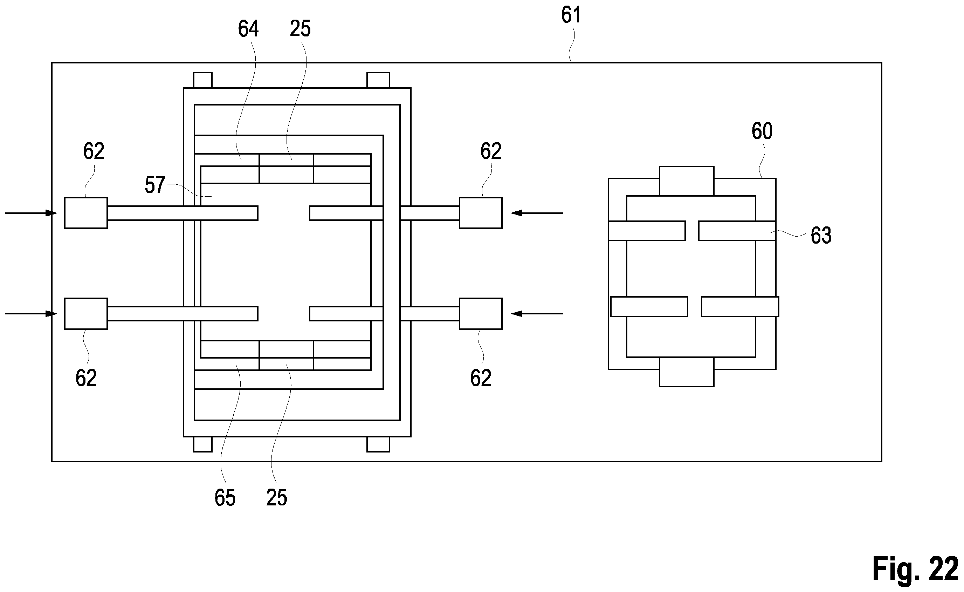

Die Figur 22 zeigt in einer Draufsicht links ein befülltes Magazin 54 mit einem Zellstapel 57 über einem Förderband 61. Rechts daneben ist ein fertiges Zellpaket 60 auf dem Förderband 61 dargestellt, das zum Abtransport bereitsteht. Schieber 62 dienen dazu den Zellstapel 57 mit einem Klebeband 63 zu einem festen Zellpaket 60 zu verbinden. Hierbei ist der Zellstapel 57 innerhalb der Magazins 54 an seinen Stirnseiten 64 gehalten, an denen auch die Ableiter 25 liegen.

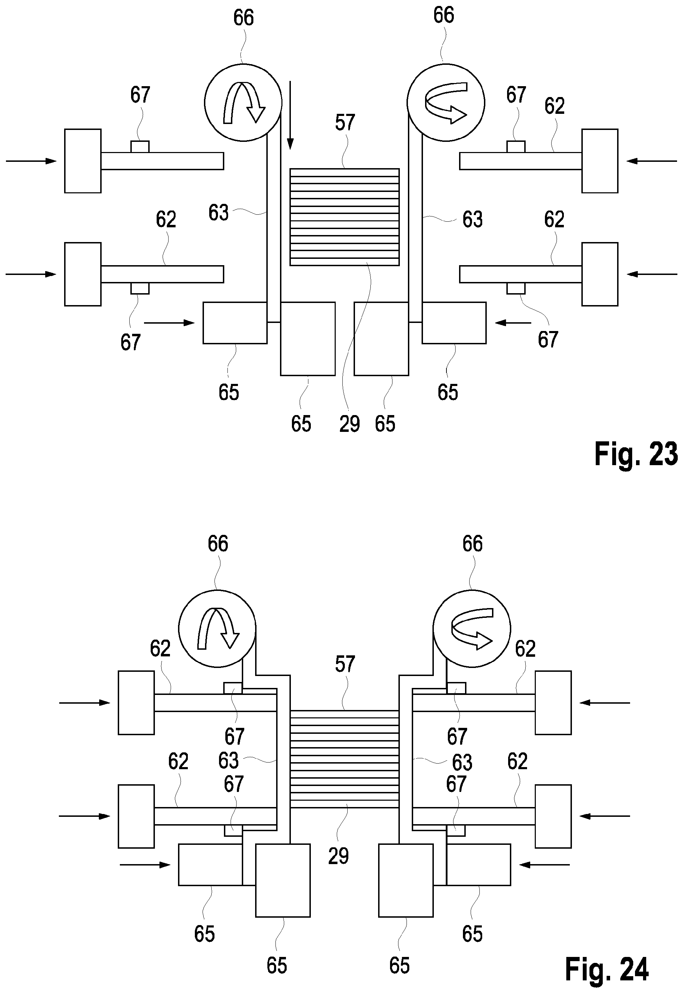

In Figur 23 ist der erste Schritt zum Verkleben dargestellt. Dabei sind die Schieber 62 zunächst seitlich nach außen verfahren und vier Klebebänder 63 werden mittels Klebeziehern 65 von Klebebandrollen 66 abgezogen.

In Figur 24 ist der zweite Schritt dargestellt, bei dem die Schieber 62 an den Zellstapel 57 herangefahren werden und das Klebeband 63 seitlich an diesen andrücken. Hierbei werden die Klebebänder 63 gleichzeitig mit Messern 67 beschnitten, die an den Schiebern 62 angeordnet sind. Während des Beschnitts wirken die Kleberzieher 65 gleichzeitig als Gegenhalter für die Messer 67.

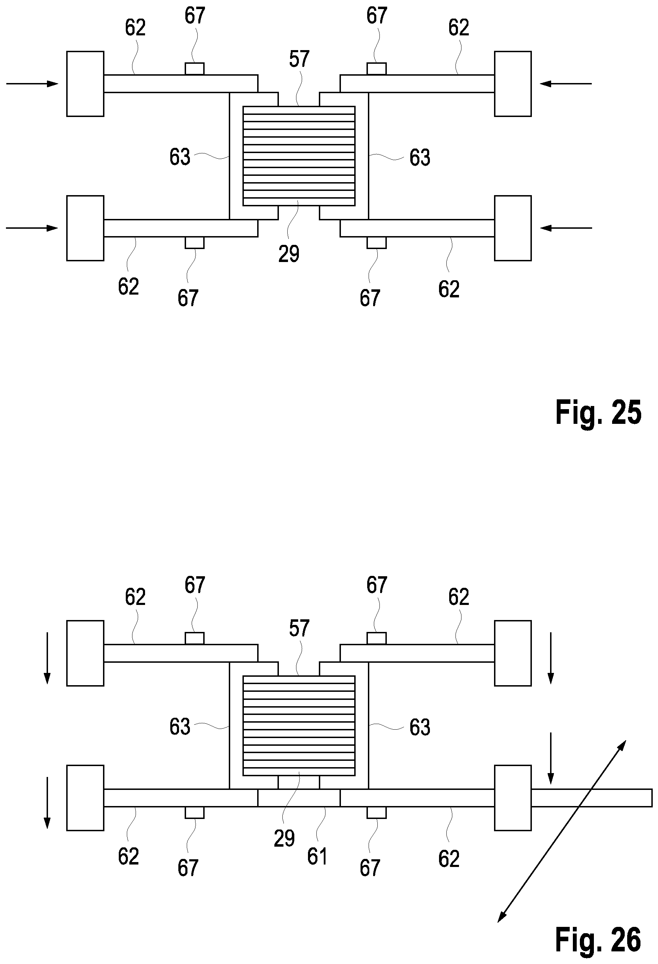

Die Figur 25 zeigt, wie die Schieber 62 anschließend weiter in Richtung des Zellstapels 57 verfahren werden und dabei die geschnittenen Klebebänder 63 an den Zellstapel 57 andrücken, so dass ein Zellpaket 60 entsteht.

Anschließend wird, wie in Figur 26 dargestellt, das so erzeugte Zellpaket 60 auf das Transportband 61 abgelegt und abtransportiert.

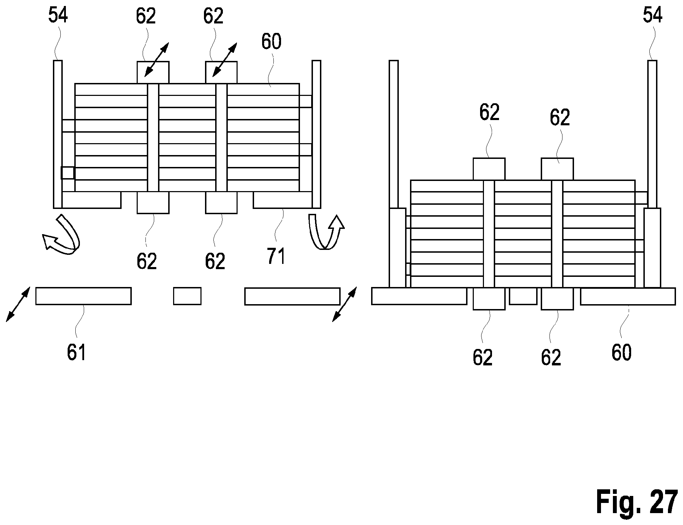

Die Figur 27 zeigt, wie sich dazu ein Boden 71 des Magazins 54 durch Wegschwenken nach unten öffnet und die Schieber 62 das Zellpaket 60 auf das Transportband 61 absetzen.

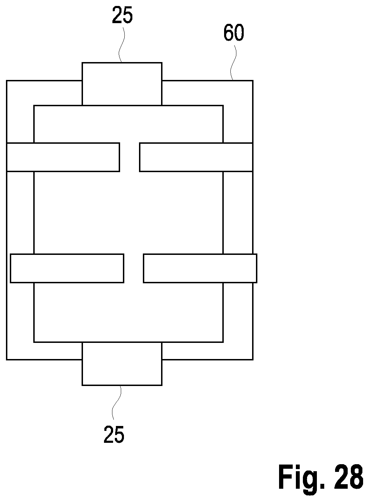

Die Figur 28 zeigt ein fertiges Zellpaket 60 mit den Ableitern 25 und den umschließenden Klebebändern 63.

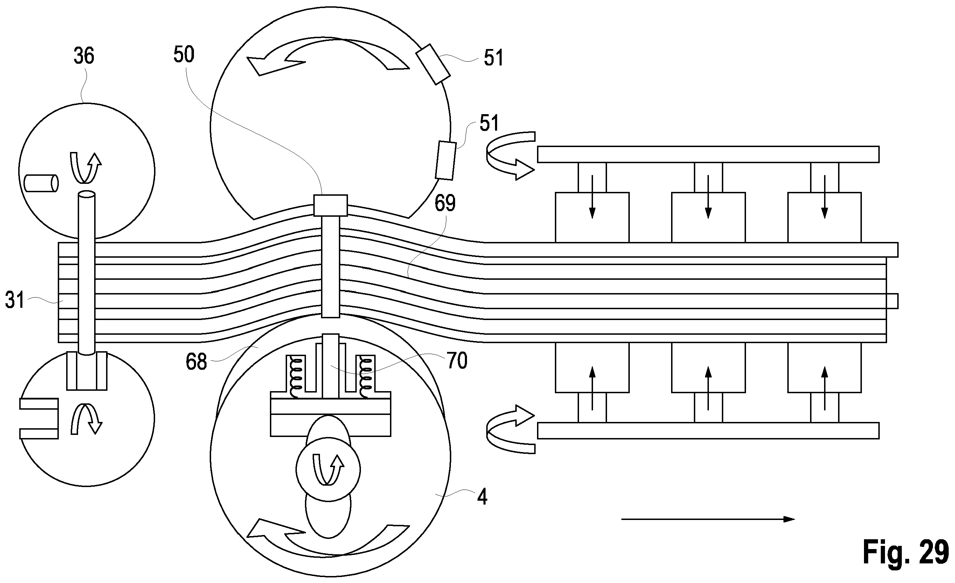

Schließlich ist in Figur 29 eine alternative Ausführungsform dargestellt, welche die Funktion einer ersten und zweiten Spannvorrichtung 32, 33 sowie einer zweiten Schneidvorrichtung 45 ausüben kann. Gezeigt ist ein Teilstapel 31, der bereits eine erste Schneidvorrichtung 1 durchlaufen hat und nun von dem Nockenantrieb 36 zur zweiten Schneidvorrichtung 45 transportiert wird. Hierbei kommt eine Unterwalze 4 zur Anwendung, die beispielsweise als nockenangetriebene Gegenwalze mit einem Formstempel 68 aus Gummi ausgebildet sein kann. Der Formstempel 68 ist dabei so ausgelegt, dass wenn ein Trennschnitt 14 eines Separators 29 in die zweite Schneidvorrichtung 45 einläuft, der Teilstapel 31 über den annähernd elliptischen, nicht kreisrunden Formstempel 68 in eine gekrümmte Bewegungsbahn 69 gezwungen wird. Die dabei erzeugte Krümmung wird nochmals verstärkt, indem der Formstempel 68 in dieser Position zusätzlich durch einen Stift 70 in Richtung des Teilstapels 31 verformt wird. Hierdurch kann eine Biegung der Werkstoffbahnen 3,22,27 erzeugt werden, die in diesem Zustand auch eine Verschiebung dieser Werkstoffbahnen 3, 22, 27 relativ zueinander bewirkt. Trennt man nun die Separatoren 29 in dieser Position mit dem an der Oberwalze 5 angeordneten Separatormesser 50, so erhält man einen Separator 29, der länger ist als die darunterliegende Anode 7 bzw. Kathode 23. Anschließend können die Ableiterschnitte 16 mit den nachfolgenden Ableitermessern 51 ausgeführt werden, wobei der Teilstapel 31 bei dieser Drehposition der Oberwalze 5 und der Unterwalze 4 keine Krümmung erfährt, da in dieser nachfolgenden Drehstellung der Formstempel 68 nicht am Teilstapel 31 anliegt. Das bedeutet, dass die Ableiterschnitte 16 mit den Ableitermessern 51 an einem geraden und gestreckten Teilstapel 31 ausgeführt werden.

Mit der vorliegenden Erfindung ist es möglich vier Arbeitsschritte in einer Anlage ausführen zu können. Diese Arbeitsschritte umfassen das Längsschneiden, das Querschneiden, das Stapeln und das Verkleben bzw. Tapen von Zellstapeln.

Zudem können sehr hohe Stapelgeschwindigkeiten realisiert werden, wobei die vorzugsweise vier Werkstoffbahnen durchgehend von einer Spannvorrichtung 32, 33, 37 bzw. von einem Greifmittel 53 fixiert sind, wodurch eine sehr hohe Positions- und Fertigungsgenauigkeit erreicht werden kann.

Die Werkstoffbahnen müssen auch nicht zuerst vereinzelt und dann wieder zusammengefügt werden, wodurch ein nur sehr geringes Materialhandling erforderlich ist und eine sehr gute Materialausnutzung gegenüber beispielsweise einer Z-Faltung erreicht wird.

Aufgrund der hohen Positionsgenauigkeit kann auch das für den Separator 29 erforderliche Übermaß von beispielsweise 6 mm gegenüber der Kathode 23 sicher gewährleistet werden.

Schließlich kann auch auf sonst gebräuchliche Laminationsprozesse verzichtet werden, wodurch der Einsatz teurer laminationsfähiger Separatoren 29 entfallen kann.

**Bezugszeichenliste**

| | | | |
|---|---|---|---|
| 1 | erste Schneidvorrichtung | 26 | Zweiter Vorratseinrichtung |
| 2 | erste Vorratseinrichtung | 27 | dritte Werkstoffbahn |
| 3 | erste Werkstoffbahn | 28 | dritte Vorratseinrichtung |
| 3a, 3b | geteilte erste Werkstoffbahn | 29 | Separator |
| 4 | Unterwalze | 30 | Führungsmittel |
| 5 | Oberwalze | 31 | Teilstapels |
| 6 | Locheinheit | 32 | erste Spannvorrichtung |
| 7 | Anode | 33 | zweite Spannvorrichtung |
| 8 | Batteriezelle | 34 | Transportstift |
| 9 | Anodenbereich | 35 | Aufnahmestift |
| 10 | Rand | 36 | Nockenantrieb |
| 11 | Rotationmesser | 37 | dritte Spannvorrichtung |
| 12 | Längsschnitt | 38 | Überwachungsvorrichtung |
| 13 | Aufnahmelöcher | 39 | Greifer |
| 14 | Trennschnitt | 40 | Nockenrad |
| 15 | Fensterschnitt | 41 | Ausnehmung |
| 16 | Ableiterschnitt | 42 | Kurvenbahn |
| 17 | Transportloch | 43 | Platte |
| 18 | Transportabschnitt | 44 | Feder |
| 19 | Fenster | 45 | zweite Schneidvorrichtung |
| 20 | Längsrichtung | 46 | erste Rolle |
| 21 | Breite | 47 | zweite Rolle |
| 22 | zweite Werkstoffbahn | 48 | Gegenrolle |
| 22a, 22b | geteilte zweite Werkstoffbahn | 49 | Streifen |
| 23 | Kathode | 50 | Separatormesser |
| 24 | Kathodenbereich | 51 | Ableitermesser |
| 25 | Ableiter | 52 | Förderband |
| 53 | Greifmittel | 63 | Klebeband |
| 54 | Magazin | 64 | Stirnseite |
| 55 | Spannelement | 65 | Klebezieher |
| 56 | Zweites Förderband | 66 | Klebebandrolle |
| 57 | Zellstapel | 67 | Messer |
| 58 | Aufnahme | 68 | Formstempel |
| 59 | Zuführvorrichtung | 69 | Bewegungsbahn |
| 60 | Zellpaket | 70 | Stift |
| 61 | Transportband | 71 | Boden |
| 62 | Schieber | | |

## Patentansprüche

1. Verfahren zur Herstellung eines Zellstapels (57) für Batteriezellen (8), das wenigsten die folgenden Schritte aufweist:
a) Zuführen wenigstens einer ersten Werkstoffbahn (3), bestehend aus einem ersten Werkstoff;
b) Ausführen eines ersten Zuschnitts an wenigstens der ersten Werkstoffbahn (3) unter Ausbildung wenigstens eines zugfesten streifenförmigen Transportabschnitts (18), wobei der Transportabschnitt (18) Zugkräfte in einer Längsrichtung der Werkstoffbahn (3) aufnehmen kann;
c) Zusammenführen der ersten Werkstoffbahn (3) mit wenigstens einer zweiten Werkstoffbahn (22,27), bestehend aus einem zweiten Werkstoff, zu einem Teilstapel (31);
d) Fixieren des so erzeugten Teilstapels (31) an einer ersten Fixierstelle mittels einer ersten verfahrbaren Spannvorrichtung (32),
e) Nachführen wenigstens einer Werkstoffbahn (22, 27), wobei dabei eine zusätzliche Länge dieser Werkstoffbahn (22, 27) von einer Vorratseinrichtung abgezogen wird, so dass diese Werkstoffbahn (22, 27) mit einer Länge verarbeitet wird, die größer ist als die Länge der nicht nachgeführten Werkstoffbahnen (27, 22), und Fixieren des so erzeugten Teilstapels (31) an einer zweiten Fixierstelle mittels einer zweiten verfahrbaren Spannvorrichtung,
f) Ausführen eines zweiten Zuschnitts des fixierten Teilstapels (31), wobei der Transportabschnitt (18) durchtrennt und damit eine vollständige Teilung des Teilstapels (31) in transversaler Richtung erzeugt wird;
g) Lösen der Spannvorrichtungen (32, 33), so dass die in Schritt e) erzeugten und in Schritt f) voneinander getrennten Teilstapel (31) freigegeben werden;
h) Anordnen von wenigstens zwei Teilstapeln (31) zu einem Zellstapel (57).

2. Verfahren nach dem vorhergehenden Anspruch, wobei die zweite Spannvorrichtung (33) in einer Längsrichtung (20) der Werkstoffbahnen (3,22,27) zwischen der ersten Spannvorrichtung (32) und den zugeführten Werkstoffbahnen (3,22,27) angeordnet ist.

3. Verfahren nach einem der vorhergehenden Ansprüche, wobei durch die Zuführung in Längsrichtung (20) betrachtet eine im ersten Zuschnitt erzeugte Vorderkante und Hinterkante wenigstens einer Werkstoffbahn (3,22,27) über die Vorderkante und Hinterkante einer benachbarten Werkstoffbahn (3,22,27) hinausragend angeordnet wird.

4. Verfahren nach einem der vorhergehenden Ansprüche, wobei zum Lösen der Spannvorrichtungen (32, 33) die zweite Spannvorrichtung 33) zeitlich vor der ersten Spannvorrichtung (32) gelöst wird.

5. Verfahren nach einem der vorhergehenden Ansprüche, wobei die erste Spannvorrichtung (32) und die zweite Spannvorrichtung (33) in einer synchronisierten Bewegung mit dem Teilstapel (31) mitbewegt werden.

6. Verfahren nach einem der vorhergehenden Ansprüche, wobei die ersten Werkstoffbahn (3) und die zweite Werkstoffbahn (22,27) auf unterschiedliche Abmessungen zugeschnitten werden.

7. Verfahren nach einem der vorhergehenden Ansprüche, wobei beim ersten Zuschnitt ein Transportloch (17) als ein Transporteingriffsmittel oder ein Fensterabschnitt mit einem Fenster (19) in der Werkstoffbahn (3,22,27) geschaffen wird.

8. Verfahren nach einem der vorhergehenden Ansprüche, wobei die Teilstapel (31) aus wenigstens vier Werkstoffbahnen (3,22,27) gebildet werden.

9. Verfahren nach einem der vorhergehenden Ansprüche, wobei beim Zuschnitt an wenigstens zwei Werkstoffbahnen (3,22) Ableiterfähnchen (25) ausgebildet werden.

10. Verfahren nach einem der vorhergehenden Ansprüche, wobei der Zellstapel (31) mit einem Verbindungsmittel (63) zu einem Zellpaket (60) verbunden wird.

11. Verfahren nach einem der vorhergehenden Ansprüche, wobei beim Anordnen der Teilstapel (31) zum Zellstapel (57) zumindest eine zusätzliche Werkstoffbahn (29) im Zellstapel (57) angeordnet wird.

12. Vorrichtung zur Herstellung eines Zellstapels (57), ausgebildet zum Ausführen des Verfahrens nach einem der Ansprüche 1 bis 11; mit wenigstens zwei Vorratseinrichtungen (2,26,28) für wenigstens eine erste und eine zweite Werkstoffbahn (3,22,27), wenigstens einer ersten und einer zweiten Schneidvorrichtung (1,45) zum Zuschneiden der Werkstoffbahnen (3,22,27), einer Transportvorrichtung (17,18,34) zur Förderung der Werkstoffbahnen (3,22,27), einer Einrichtung zum Zusammenführen der Werkstoffbahnen (30), und einer Stapelvorrichtung (54),
wobei eine erste Spannvorrichtung (32) an einer ersten Fixierstelle und eine zweite Spannvorrichtung(33) an einer zweiten Fixierstelle vorgesehen sind, wobei eine Spannvorrichtung (33) zusätzlich als Nachführvorrichtung für wenigstens eine Werkstoffbahn (22,27) ausgebildet ist; wobei mit der Nachführvorrichtung eine zusätzliche Länge dieser Werkstoffbahn (22, 27) von einer Vorratseinrichtung abziehbar ist, so dass diese Werkstoffbahn (22, 27) mit einer Länge verarbeitbar ist, die größer ist als die Länge der nicht nachgeführten Werkstoffbahnen (27, 22).

13. Vorrichtung nach dem vorhergehenden Anspruch, **dadurch gekennzeichnet, dass** die zweite Spannvorrichtung (33) als Nachführvorrichtung ausgebildet und zwischen der ersten Spannvorrichtung (32) und der Vorratseinrichtung (2,26,28) angeordnet ist.

14. Vorrichtung nach einem der vorhergehenden Ansprüche 12 und 13, **dadurch gekennzeichnet, dass** die Spannvorrichtungen (32,33) mit einer Antriebsvorrichtung verbunden sind und synchron mit den Werkstoffbahnen (3,22,27) bewegbar sind.

15. Vorrichtung nach einem der vorhergehenden Ansprüche 12 bis 14, **dadurch gekennzeichnet, dass** die Spannvorrichtungen (32,33) und wenigstens die zweite Schneidvorrichtung (45) so ausgebildet sind, dass die Spannvorrichtungen (32,33) im geschlossenen Zustand die zweite Schneidvorrichtung (45) durchlaufen können.

16. Vorrichtung nach einem der vorhergehenden Ansprüche 12 bis 15, **dadurch gekennzeichnet, dass** die Nachführvorrichtung (33) mittels wenigstens drei gruppenweise verfahrbaren Führungselementen (39) ausgebildet ist.

## Claims

1. Method for producing a cell stack (57) for battery cells (8), comprising at least the following steps:
a) feeding at least one first material web (3), consisting of a first material;
b) performing a first cutting operation on at least the first material web (3) so as to form at least one tension-resistant strip-shaped transporting section (18), wherein the transporting section (18) can absorb tensile forces in a longitudinal direction of the material web (3);
c) bringing the first material web (3) together with at least one second material web (22, 27), consisting of a second material, to form a partial stack (31);
d) fixing the partial stack (31) produced in this way at a first fixing point by means of a first movable clamping device (32),
e) supplementing at least one material web (22, 27), wherein an additional length of this material web (22, 27) is drawn off from a supply device such that this material web (22, 27) is processed with a length which is greater than the length of the material webs (27, 22) that are not supplemented, and fixing the partial stack (31) thus produced at a second fixing point by means of a second movable clamping device,
f) performing a second cutting operation on the fixed partial stack (31), wherein the transporting section (18) is severed and thus a complete division of the partial stack (31) in the transverse direction is produced;
g) releasing the clamping devices (32, 33) such that the partial stacks (31) produced in step e) and separated from one another in step f) are released;
h) arranging at least two partial stacks (31) to form a cell stack (57).

2. Method according to the preceding claim, wherein the second clamping device (33) is arranged between the first clamping device (32) and the fed material webs (3, 22, 27) in a longitudinal direction (20) of the material webs (3, 22, 27).

3. Method according to one of the preceding claims, wherein, as a result of the feed, a front edge and rear edge of at least one material web (3, 22, 27) produced in the first cutting operation, as viewed in the longitudinal direction (20), are arranged so as to project beyond the front edge and rear edge of an adjacent material web (3, 22, 27).

4. Method according to one of the preceding claims, wherein, for releasing the clamping devices (32, 33), the second clamping device (33) is released at a time before the first clamping device (32).

5. Method according to one of the preceding claims, wherein the first clamping device (32) and the second clamping device (33) are moved in a synchronized movement with the partial stack (31).

6. Method according to one of the preceding claims, wherein the first material web (3) and the second material web (22, 27) are cut to different dimensions.

7. Method according to one of the preceding claims, wherein, in the first cutting operation, a transporting hole (17) is created in the material web (3, 22, 27) as a transporting engagement means or a window section with a window (19).

8. Method according to one of the preceding claims, wherein the partial stacks (31) are formed from at least four material webs (3, 22, 27).

9. Method according to one of the preceding claims, wherein, in the cutting operation, conductor lugs (25) are formed on at least two material webs (3, 22).

10. Method according to one of the preceding claims, wherein the cell stack (31) is connected by a connecting means (63) to form a cell pack (60).

11. Method according to one of the preceding claims, wherein, when arranging the partial stacks (31) to form the cell stack (57), at least one additional material web (29) is arranged in the cell stack (57).

12. Apparatus for producing a cell stack (57), designed for carrying out the method according to one of Claims 1 to 11; with at least two supply devices (2, 26, 28) for at least one first and one second material web (3, 22, 27), at least one first and one second cutting device (1, 45) for cutting the material webs (3, 22, 27) to size, a transporting device (17, 18, 34) for conveying the material webs (3, 22, 27), a device for bringing the material webs (30) together, and a stacking device (54), wherein a first clamping device (32) is provided at a first fixing point and a second clamping device (33) is provided at a second fixing point, wherein one clamping device (33) is additionally designed as a supplementing device for at least one material web (22, 27); wherein, with the supplementing device, an additional length of this material web (22, 27) can be drawn off from a supply device such that this material web (22, 27) can be processed with a length which is greater than the length of the material webs (27, 22) that are not supplemented.

13. Apparatus according to the preceding claim, **characterized in that** the second clamping device (33) is designed as a supplementing device and is arranged between the first clamping device (32) and the supply device (2, 26, 28).

14. Apparatus according to one of the preceding Claims 12 and 13, **characterized in that** the clamping devices (32, 33) are connected to a drive device and are movable synchronously with the material webs (3, 22, 27).

15. Apparatus according to one of the preceding Claims 12 to 14, **characterized in that** the clamping devices (32, 33) and at least the second cutting device (45) are designed such that the clamping devices (32, 33) can pass through the second cutting device (45) in the closed state.

16. Apparatus according to one of the preceding Claims 12 to 15, **characterized in that** the supplementing device (33) is formed by means of at least three guide elements (39) which can be moved in groups.

## Revendications

1. Procédé de fabrication d'un empilement de cellules (57) destiné à des cellules de batterie (8), comprenant au moins les étapes suivantes :
a) l'amenée d'au moins une première bande de matériau (3) constituée d'un premier matériau ;
b) la réalisation d'une première découpe dans au moins la première bande de matériau (3), de manière à former au moins une section de transport (18) en forme de bande et résistante à la traction, ladite section de transport (18) pouvant supporter des forces de traction dans une direction longitudinale de la bande de matériau (3) ;
c) la réunion de la première bande de matériau (3) avec au moins une deuxième bande de matériau (22, 27) constituée d'un deuxième matériau pour former un empilement partiel (31) ;
d) la fixation de l'empilement partiel (31) ainsi formé en un premier point de fixation au moyen d'un premier dispositif de serrage mobile (32),
e) l'avancement d'au moins une bande de matériau (22, 27), une longueur supplémentaire de cette bande de matériau (22, 27) étant alors tirée d'un appareil d'approvisionnement, de sorte que cette bande de matériau (22, 27) est traitée sur une longueur supérieure à celle des bandes de matériau (27, 22) qui n'ont pas été avancées, et la fixation de l'empilement partiel (31) ainsi formé en un deuxième point de fixation au moyen d'un deuxième dispositif de serrage mobile,
f) la réalisation d'une deuxième découpe de l'empilement partiel (31) fixé, au cours de laquelle la section de transport (18) est sectionnée, entraînant ainsi une division complète de l'empilement partiel (31) dans la direction transversale ;
g) le desserrage des dispositifs de serrage (32, 33), de sorte que les empilements partiels (31) formés à l'étape e) et séparés l'un de l'autre à l'étape f) sont libérés ;
h) l'agencement d'au moins deux empilements partiels (31) pour former un empilement de cellules (57).

2. Procédé selon la revendication précédente, dans lequel le deuxième dispositif de serrage (33) est disposé, dans une direction longitudinale (20) des bandes de matériau (3, 22, 27), entre le premier dispositif de serrage (32) et les bandes de matériau (3, 22, 27) amenées.

3. Procédé selon l'une des revendications précédentes, dans lequel, dans la direction longitudinale (20) considérée par rapport au sens d'amenée, un bord avant et un bord arrière d'au moins une bande de matériau (3, 22, 27), formés lors de la première découpe, sont disposés de manière à dépasser respectivement du bord avant et du bord arrière d'une bande de matériau (3, 22, 27) adjacente.

4. Procédé selon l'une des revendications précédentes, dans lequel, lors du desserrage des dispositifs de serrage (32, 33), le deuxième dispositif de serrage (33) est desserré avant le premier dispositif de serrage (32).

5. Procédé selon l'une des revendications précédentes, dans lequel le premier dispositif de serrage (32) et le deuxième dispositif de serrage (33) sont déplacés avec l'empilement partiel (31) selon un mouvement synchronisé.

6. Procédé selon l'une des revendications précédentes, dans lequel la première bande de matériau (3) et la deuxième bande de matériau (22, 27) sont découpées à des dimensions différentes.

7. Procédé selon l'une des revendications précédentes, dans lequel, lors de la première découpe, un trou de transport (17) servant de moyen de prise pour le transport ou une section fenêtrée comportant une fenêtre (19) est formé dans la bande de matériau (3, 22, 27).

8. Procédé selon l'une des revendications précédentes, dans lequel les empilements partiels (31) sont formés à partir d'au moins quatre bandes de matériau (3, 22, 27).

9. Procédé selon l'une des revendications précédentes, dans lequel, lors de la découpe, des languettes de collecteur de courant (25) sont formées sur au moins deux bandes de matériau (3, 22).

10. Procédé selon l'une des revendications précédentes, dans lequel l'empilement de cellules (31) est assemblé au moyen d'un élément de liaison (63) pour former un paquet de cellules (60).

11. Procédé selon l'une des revendications précédentes, dans lequel, lors de l'agencement des empilements partiels (31) pour former l'empilement de cellules (57), au moins une bande de matériau supplémentaire (29) est disposée dans l'empilement de cellules (57).

12. Dispositif de fabrication d'un empilement de cellules (57), conçu pour mettre en œuvre le procédé selon l'une des revendications 1 à 11, comprenant au moins deux appareils d'approvisionnement (2, 26, 28) destinés à au moins une première et une deuxième bande de matériau (3, 22, 27), au moins un premier et un deuxième dispositif de découpe (1, 45) destinés à découper les bandes de matériau (3, 22, 27), un dispositif de transport (17, 18, 34) destiné à faire avancer les bandes de matériau (3, 22, 27), un appareil de réunion des bandes de matériau (30) et un dispositif d'empilage (54),
dans lequel un premier dispositif de serrage (32) est prévu en un premier point de fixation et un deuxième dispositif de serrage (33) est prévu en un deuxième point de fixation, l'un des dispositifs de serrage (33) étant en outre conçu comme dispositif d'avancement d'au moins une bande de matériau (22, 27) ; dans lequel une longueur supplémentaire de cette bande de matériau (22, 27) peut être tirée d'un appareil d'approvisionnement au moyen du dispositif d'avancement, de sorte que cette bande de matériau (22, 27) peut être traitée sur une longueur supérieure à celle des bandes de matériau (27, 22) qui ne sont pas avancées.

13. Dispositif selon la revendication précédente, **caractérisé en ce que** le deuxième dispositif de serrage (33) est conçu comme dispositif d'avancement et est disposé entre le premier dispositif de serrage (32) et l'appareil d'approvisionnement (2, 26, 28).

14. Dispositif selon l'une des revendications précédentes 12 et 13, **caractérisé en ce que** les dispositifs de serrage (32, 33) sont reliés à un dispositif d'entraînement et peuvent être déplacés de manière synchronisée avec les bandes de matériau (3, 22, 27).

15. Dispositif selon l'une des revendications précédentes 12 à 14, **caractérisé en ce que** les dispositifs de serrage (32, 33) et au moins le deuxième dispositif de découpe (45) sont conçus de telle sorte que les dispositifs de serrage (32, 33) puissent traverser le deuxième dispositif de découpe (45) lorsqu'ils sont à l'état fermé.

16. Dispositif selon l'une des revendications précédentes 12 à 15, **caractérisé en ce que** le dispositif d'avancement (33) est constitué d'au moins trois éléments de guidage (39) déplaçables par groupes.
